# EUROPEAN PATENT APPLICATION

(11) **EP 4 831 692 A1**
(43) Date of publication of application: **28.10.2026**
(21) Application number: 25751051.1
(22) Date of filing: 08.01.2025
(51) Int. Cl.: G01S 19/42, G06N 7/01

(54) **VISIBILITY PROBABILITY DETERMINATION METHOD AND APPARATUS, COMPUTER DEVICE, AND STORAGE MEDIUM**

(30) Priority: 06.02.2024 CN 202410173803
(71) Applicant: Tencent Technology (Shenzhen) Company Limited, Shenzhen, Guangdong 518057 (CN)
(72) Inventor: BIAN, Guangyu, Shenzhen, Guangdong 518057 (CN); ZHOU, Qifan, Shenzhen, Guangdong 518057 (CN); TONG, Mengxiang, Shenzhen, Guangdong 518057 (CN); YUAN, Yilong, Shenzhen, Guangdong 518057 (CN)
(74) Representative: Nederlandsch Octrooibureau
(86) International application number: PCT/CN2025/071292
(87) International publication number: WO 2025/167449

(57) **Abstract**

A visibility probability determination method executed by a computer device, the method comprising: determining an obstruction of an object to be positioned, and on the basis of a space occupation parameter of the obstruction, respectively performing inward contraction and outward expansion on the external contour of the obstruction represented by the space occupation parameter to obtain error modeling data (202); on the basis of the error modeling data, determining an inward contraction boundary determined by means of inward contraction and an outward expansion boundary determined by means of outward expansion, and using the inward contraction boundary and the outward expansion boundary to construct an error space range of the obstruction (204); acquiring a candidate location of said object, and on the basis of a linear signal propagation path between a satellite location of a satellite and the candidate location, determining a spatial location relationship between the linear signal propagation path and the error space range (206); and determining a visibility probability value of the satellite for the candidate location on the basis of the spatial location relationship, the visibility probability value being used for determining a satellite-based positioning location of said object in combination with the candidate location (208).

## Description

### RELATED APPLICATION

This application claims priority to Chinese Patent Application No. 2024101738030, entitled "VISIBILITY PROBABILITY DETERMINING METHOD AND APPARATUS, COMPUTER DEVICE, AND STORAGE MEDIUM" filed on February 06, 2024.

### FIELD OF THE TECHNOLOGY

This application relates to the field of satellite positioning, and in particular, to a visibility probability determining method and apparatus, a computer device, and a storage medium.

### BACKGROUND OF THE DISCLOSURE

The global navigation satellite system (GNSS), also referred to as a global navigation satellite system, is a space-based radio navigation and positioning system that can provide users with round-the-clock three-dimensional coordinates, velocities, and time information at any location on the earth's surface or in a near-earth space.

Currently, satellite visibility obtained based on the signal-to-noise ratio determining standard may be used as a reference standard, and satellite spatial visibility obtained by a to-be-positioned object in possible positions on the map based on existing 3D building models and information such as an azimuth angle and an elevation angle of the satellite is scored, then a positioning position of the to-be-positioned object is determined based on the visibility scores.

However, in actual positioning, the quantity of visible satellites is often reduced due to the influence of terrain. In other words, in a case of shadowing of obstructions, a large error will be caused to the accuracy of satellite visibility. Therefore, the accuracy of satellite-based object positioning will be reduced.

### SUMMARY

This application provides a method and apparatus for satellite-based positioning, a computer device, and a storage medium.

According to a first aspect, this application provides a method for satellite-based positioning, performed by a computer device, the method including:
determining an obstruction of an object; obtaining a space occupancy parameter of the obstruction, the space occupancy parameter indicating a first model of the obstruction; determing error modeling data by performing, based on the space occupancy parameter, an inward contraction on the first model to generate a second model and an outward expansion on the first model to generate a third model, the error modeling data comprising a first parameter indicating the second model, and a second parameter indicating the third model;
determining, based on the error modeling data, a first space bounded by a first outer surface of the second model and a second outer surface of the third model;
acquiring a candidate position of the object and a satellite position of a satellite; determining, based on a linear signal propagation path between the satellite position and the candidate position, a first position relationship between the linear signal propagation path and the first space; and
determining a visibility probability value of the satellite for the candidate position according to the first position relationship, the visibility probability value being configured for determining a position of the object.

According to a second aspect, this application further provides a apparatus, the apparatus for satellite-based positioning including:
a modeling module, configured to determine an obstruction of an object; obtain a space occupancy parameter of the obstruction, the space occupancy parameter indicating a first model of the obstruction; determine error modeling data by performing, based on the space occupancy parameter, an inward contraction on the first model to generate a second model and an outward expansion on the first model to generate a third model, the error modeling data comprising a first parameter indicating the second model, and a second parameter indicating the third model;
an error space range construction module, configured to determine, based on the error modeling data, a first space bounded by a first outer surface of the second model and a second outer surface of the third model;
a position relationship determining module, configured to acquire a candidate position of the object and a satellite position of a satellite; determine, based on a linear signal propagation path between the satellite position and the candidate position, a first position relationship between the linear signal propagation path and the first space; and
a visibility probability value determining module, configured to determine a visibility probability value of the satellite for the candidate position according to the first position relationship, the visibility probability value being configured for determining a position of the object.

According to a third aspect, this application further provides a computer device. The computer device includes a memory and a processor, the memory storing a computer program, the processor, when executing the computer program, implementing the foregoing visibility probability determining method.

According to a fourth aspect, this application further provides a computer-readable storage medium. The computer-readable storage medium storing a computer program, the computer program, when executed by a processor, implementing the foregoing visibility probability determining method.

According to a fifth aspect, this application further provides a computer program product. The computer program product includes a computer program, the computer program, when executed by a processor, implementing the foregoing visibility probability determining method.

Details of one or more embodiments of this application are provided in the subsequent accompanying drawings and descriptions. Other features, objectives, and advantages of this application will become apparent from the specification, the accompanying drawings, and the claims.

### BRIEF DESCRIPTION OF THE DRAWINGS

To describe the technical solutions in the embodiments of this application or the conventional technologies more clearly, the following briefly describes the accompanying drawings required for describing the embodiments or the conventional technologies. Apparently, the accompanying drawings in the following description show only some embodiments of this application, and a person of ordinary skill in the art may still derive other drawings from the disclosed accompanying drawings without creative efforts.
FIG. 1 is a diagram of an application environment of a method for satellite-based positioning according to an embodiment.
FIG. 2 is a schematic flowchart of a method for satellite-based positioning according to an embodiment.
FIG. 3 is a schematic diagram of splitting a plurality of obstructions at different heights according to an embodiment.
FIG. 4 is a schematic diagram of an error space range according to an embodiment.
FIG. 5 is a schematic diagram of a linear signal propagation path according to an embodiment.
FIG. 6 is a schematic flowchart of determining a position relationship according to an embodiment.
FIG. 7 is a schematic diagram of a top-view position relationship according to an embodiment.
FIG. 8 is a schematic diagram of a side-view position relationship according to an embodiment.
FIG. 9 is a schematic flowchart of determining a visibility probability value of a satellite for a candidate position according to an embodiment.
FIG. 10 is a schematic diagram of a top-view error space range according to an embodiment.
FIG. 11 is a schematic diagram of a top-view vertical distance and a top-view vertex distance according to an embodiment.
FIG. 12 is a schematic diagram of a side-view error space range according to an embodiment.
FIG. 13 is a schematic diagram of a side-view vertical distance and a side-view vertex distance according to an embodiment.
FIG. 14 is a schematic flowchart of determining a visibility probability value of a satellite for a candidate position according to another embodiment.
FIG. 15 is a schematic diagram in which a top-view projection does not intersect with a top-view outward expansion boundary according to an embodiment.
FIG. 16 is a schematic diagram in which a top-view projection intersects with a top-view inward contraction boundary according to an embodiment.
FIG. 17 is a schematic flowchart of determining a visibility probability value of a satellite for a candidate position according to still another embodiment.
FIG. 18 is a complete schematic flowchart of a visibility probability determining method according to an embodiment.
FIG. 19 is a structural block diagram of a apparatus for satellite-based positioning according to an embodiment.
FIG. 20 is a diagram of an internal structure of a computer device according to an embodiment.

### DESCRIPTION OF EMBODIMENTS

The technical solutions in embodiments of this application are clearly and completely described below with reference to the accompanying drawings in the embodiments of this application. Apparently, the embodiments to be described are merely some rather than all of the embodiments of this application. All other embodiments obtained by a person of ordinary skill in the art based on the embodiments of this application without creative efforts shall fall within the protection scope of this application. The term, involved in the following description, "some embodiments" describes subsets of all possible embodiments, but "some embodiments" may be the same subset or different subsets of all the possible embodiments and may be combined with each other without conflict.

The global navigation satellite system (GNSS), also referred to as a global navigation satellite system, is a space-based radio navigation and positioning system that can provide users with round-the-clock three-dimensional coordinates, velocities, and time information at any location on the earth's surface or in a near-earth space. Currently, satellite visibility obtained based on the signal-to-noise ratio determining standard may be used as a reference standard, and satellite spatial visibility obtained by a to-be-positioned object in possible positions on the map based on existing 3D building models and information such as an azimuth angle and an elevation angle of the satellite is scored, then a positioning position of the to-be-positioned object is determined based on the visibility scores. Based on this, an elevation angle and an azimuth angle of a satellite may currently be calculated based on an observation point position and the satellite position. If the elevation angle is below the ground plane, the satellite is invisible. In some other methods, shadowing factors in a signal propagation path are taken into account, and an elevation angle of an obstruction in the satellite's azimuth is calculated. The satellite's elevation angle needs to be greater than the elevation angle of the obstruction, then the satellite is considered to be visible. However, although in the foregoing methods, the obstruction influence is taken into account, the modeling of the obstruction is relatively simple, and errors in the obstruction data are not taken into account. Moreover, the outputted visibility result is a binary result, that is, either visible or invisible. However, in actual positioning, the quantity of visible satellites is often reduced due to the influence of terrain. In other words, in a case of shadowing of obstructions, a large error will be caused to the accuracy of satellite visibility. Therefore, positioning based on a visible result with an error will reduce the accuracy of satellite-based object positioning.

To resolve the foregoing problems, the embodiments of this application provide a method for satellite-based positioning that can improve the accuracy of satellite-based object positioning. Before a specific description is provided, some terms involved in this application are first described.
I. The global navigation satellite system (GNSS), also referred to as a global navigation satellite system, is a space-based radio navigation and positioning system that can provide users with round-the-clock three-dimensional coordinates, velocities, and time information at any location on the earth's surface or in a near-earth space. The navigation satellite system has been widely used in navigation, communication, consumer entertainment, surveying and mapping, time service, vehicle monitoring and management, automotive navigation and information services, and other aspects. Moreover, the general development trend thereof is to provide high-precision services for real-time applications.
II. A mobile terminal, or referred to as a mobile communication terminal, refers to a computer device that can be used during moving. The mobile terminal generally integrates a GNSS positioning chip, configured to process satellite signals and perform precise user positioning, which has been widely used in location services currently. Based on this, the mobile terminal includes a satellite positioning device and the mobile terminal can acquire satellite observation values. The satellite observation values outputted by the mobile terminal include a pseudorange, a pseudorange rate, and an accumulated delta range (ADR). The pseudorange is obtained by measuring a geometric distance between the satellite and the positioning device, the pseudorange rate observation value is obtained by measuring the Doppler effect caused by the relative motion between the positioning device and the satellite, and the ADR is obtained by measuring a change in the geometric distance between the satellite and the positioning device.
III. Shadow matching positioning: The principle of the shadow matching algorithm is to use the satellite visibility obtained based on the signal-to-noise ratio determining standard as a reference standard, and to score satellite spatial visibility obtained by a receiver in possible positions (search range) in an urban canyon based on existing three-dimensional (3D) building models and information such as an azimuth angle and an elevation angle of the satellite. The position with the highest score (visibility matching degree) among all possible positions is used as a positioning position of the receiver.

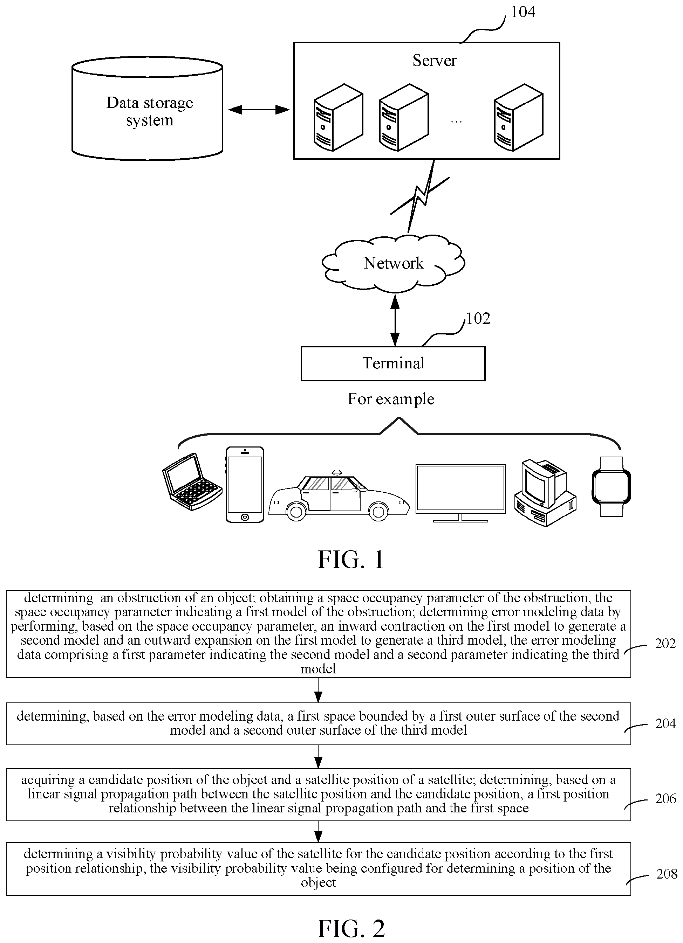

The visibility probability determining method provided in the embodiments of this application may be applied to an application environment shown in FIG. 1. A terminal 102 communicates with a server 104 through a network. A data storage system may store data that needs to be processed by the server 104. The data storage system may be integrated on the server 104, or placed on the cloud or another server.

Specifically, a description is provided by using application to the server 104 as an example. In a case that there is an obstruction affecting a satellite's positioning on a to-be-positioned object, the server 104 performs inward contraction and outward expansion on the obstruction based on a space occupancy parameter of the obstruction, to obtain error modeling data. Based on this, the server 104 then determines, based on the error modeling data, an inward contraction boundary determined through the inward contraction and an outward expansion boundary determined through the outward expansion, and constructs an error space range of the obstruction by using the inward contraction boundary and the outward expansion boundary; and acquires a candidate position of the to-be-positioned object, and determining, based on a linear signal propagation path between a satellite position of a satellite and the candidate position, a position relationship between the linear signal propagation path and the error space range. Therefore, the server 104 determines a visibility probability value of the satellite for the candidate position according to the position relationship, the visibility probability value being configured for determining a satellite positioning position of the to-be-positioned object in combination with the candidate position. Because the visibility probability value does not directly describe whether a candidate position is visible or invisible as that in the conventional binary manner, but allows for a data error of the obstruction in a percentage probability manner, the visibility probability value can more flexibly and accurately describe a shadowing relationship between the obstruction and the candidate position. Therefore, based on improvement of accuracy of the visibility probability value, by positioning the to-be-positioned object based on the foregoing visibility probability value, the accuracy of object positioning can be improved.

The terminal 102 may be, but not limited to, any desktop computer, notebook computer, smartphone, tablet computer, Internet of Things device, and portable wearable device. The Internet of Things device may be a smart speaker, a smart TV, a smart air conditioner, a smart in-vehicle device, or the like. The portable wearable device may be a smart watch, a smart band, a head-mounted device, or the like. The server 104 may be implemented by an independent server or a server cluster including a plurality of servers. Besides, the visibility probability determining method provided in the embodiments of this application may be applied to various scenarios, including, but not limited to, cloud technology, artificial intelligence, smart transportation, assisted driving, and other scenarios.

Details are described by using the following embodiments: in some embodiments, as shown in FIG. 2, a method for satellite-based positioning is provided. Specifically, a visibility probability determining method for satellite-based positioning is provided. A description is provided by using an example in which the method is applied to the server 104 in FIG. 1. The method may alternatively be applied to a system including the terminal 102 and the server 104, and implemented through the interaction between the terminal 102 and the server 104. In some embodiments, the method includes the following operations:
Operation 202: Determine an obstruction of an object; obtaining a space occupancy parameter of the obstruction, the space occupancy parameter indicating a first model of the obstruction; determine error modeling data by performing, based on the space occupancy parameter, an inward contraction on the first model to generate a second model and an outward expansion on the first model to generate a third model, the error modeling data comprising a first parameter indicating the second model, and a second parameter indicating the third model.

In some embodiments, the space occupancy parameter comprises vertex coordinates of a base of the obstruction and a height of the obstruction. The generating the second model by the inward contraction on the first model comprises: performing an inward offset on the vertex coordinates of the base to obtain contracted vertex coordinates, and reducing the height to obtain a contracted height, the second model being indicated by the contracted vertex coordinates and the contracted height. The generating the third model by the outward expansion on the first model comprises: performing an outward offset on the vertex coordinates of the base to obtain expanded vertex coordinates, and increasing the height to obtain an expanded height, the third model being indicated by the expanded vertex coordinates and the expanded height.

In some embodiments, inward contraction refers to translating each vertex coordinate constituting the base polygon of the obstruction, along the normal direction of its corresponding edge, toward the interior of the polygon by a preset offset distance. This operation generates a new, contracted polygon located inside the original polygon. Correspondingly, the height of the obstruction is also reduced according to a certain ratio or rule to obtain a contracted height. The right prism defined by the contracted polygon and the contracted height constitutes the second model after inward contraction. Outward expansion refers to translating each vertex coordinate constituting the base polygon of the obstruction, along the normal direction of its corresponding edge, toward the exterior of the polygon by a preset offset distance. This operation generates a new, expanded polygon located outside the original polygon. Correspondingly, the height of the obstruction is also increased according to a certain ratio or rule to obtain an expanded height. The right prism defined by the expanded polygon and the expanded height constitutes the third model after outward expansion. The above offset operations may be implemented using known polygonal contour offset algorithms, such as the CavalierContours algorithm.

In some embodiments, Operation 202 includes: determining an obstruction of a to-be-positioned object, and respectively perform, based on a space occupancy parameter of the obstruction, inward contraction and outward expansion on an external contour of the obstruction represented by the space occupancy parameter, to obtain error modeling data.

The space occupancy parameter of the obstruction is in the form of a right polyhedron. The space occupancy parameter includes a height and vertex coordinates. The height is a height of the obstruction, and the vertex coordinates are specifically bottom surface vertex coordinates of bottom surface vertices forming the bottom surface of the obstruction. The vertex coordinates may be directly latitude and longitude coordinates. However, due to practical application requirements, the vertex coordinates may alternatively be planar coordinates converted from latitude and longitude coordinates. This is not specifically limited herein. Based on this, a data format of the space occupancy parameter is specifically {*Pᵢ*, H}, where *Pᵢ* represents the vertex coordinates, and H represents the height. Besides, the error modeling data is data obtained after the inward contraction and the outward expansion are performed based on the space occupancy parameter of the obstruction. That is, the error modeling data includes a height after the inward contraction and a height after the outward expansion, and vertex coordinates after the inward contraction and vertex coordinates after the outward expansion. Accordingly, the first parameter comprises vertex coordinates of a base of the second model and a height of the second model. The second parameter comprises vertex coordinates of a base of the third model and a height of the third model.

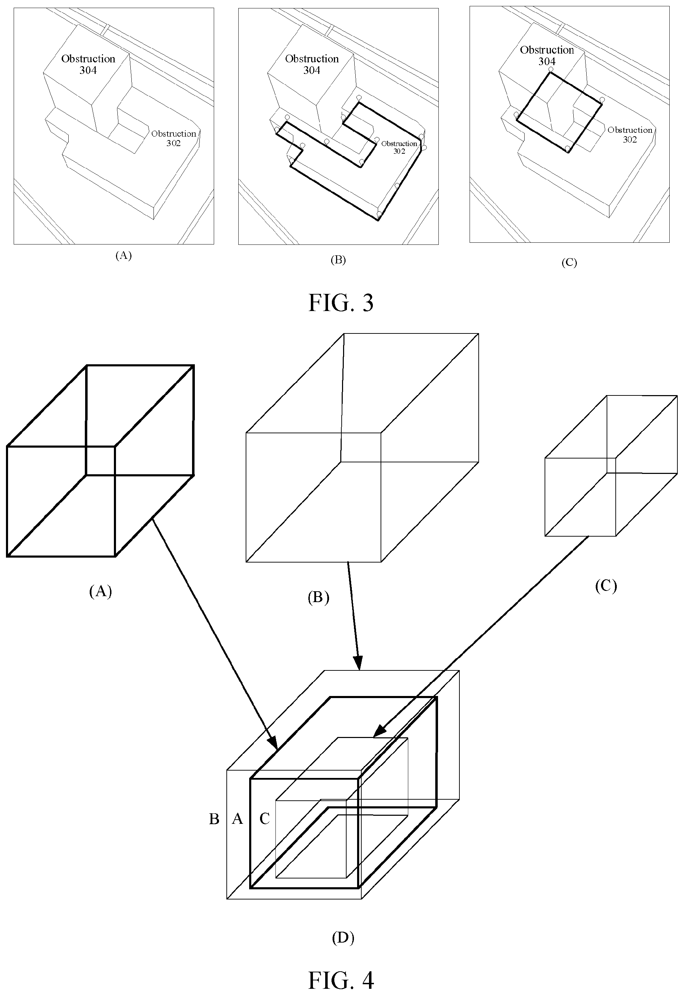

Secondly, the obstruction is an object affecting the satellite's positioning on the to-be-positioned object. Therefore, for the to-be-positioned object, there may be one or more obstructions. If there are a plurality of obstructions, and heights of the plurality of obstructions are different, that is, in practical applications, there may be a case in which an obstruction belongs to the same obstructing building but has different heights, in this case, the plurality of obstruction heights forming the obstructing building may be split to obtain a plurality of obstructions. For ease of understanding, as shown in FIG. 3, (A) in FIG. 3 shows an obstructing building including obstructions of different heights, specifically including an obstruction 302 and an obstruction 304. Therefore, based on respective heights of different obstructions, the obstructing building shown in (A) of FIG. 3 may be split to obtain the obstruction 302 shown in (B) in FIG. 3 and the obstruction 304 shown in (C) in FIG. 3. Further, as can be seen from (B) in FIG. 3, a space occupancy parameter of the obstruction 302 includes bottom surface vertex coordinates of a plurality of bottom surface vertices. The plurality of bottom surface vertices in the obstruction 302 are gray bottom surface vertices forming the bottom surface of the obstruction 302 in (B) in FIG. 3. Similarly, as can be seen from (C) in FIG. 3, a space occupancy parameter of the obstruction 304 includes bottom surface vertex coordinates of a plurality of bottom surface vertices. The plurality of bottom surface vertices in the obstruction 304 are gray bottom surface vertices forming the bottom surface of the obstruction 304 in (C) in FIG. 3.

Specifically, the server first determines that there is an obstruction affecting the satellite's positioning on the to-be-positioned object. The method for determining an obstruction affecting satellite positioning for the to-be-positioned object may be as follows: the to-be-positioned object determines whether there is an obstruction based on the quality and/or power of one or more signals between the to-be-positioned object and the satellite. Specifically, when the signal between the to-be-positioned object and the satellite is attenuated or the signal quality deteriorates, it is determined that there is an obstruction. Besides, the method may alternatively be that the to-be-positioned object directly captures an image of a nearby obstruction by using an image acquisition apparatus, to determine that there is an obstruction. Therefore, the method for determining an obstruction is not specifically limited in this embodiment.

Further, the server determines a space occupancy parameter of the obstruction. That is, the server first determines whether there is a single obstruction or there are a plurality of obstructions. If there is a single obstruction, the server directly acquires a height of the obstruction and bottom surface vertex coordinates of bottom surface vertices forming the bottom surface of the obstruction, to obtain a space occupancy parameter of the obstruction. If there are a plurality of obstructions, the server needs to split the plurality of obstructions according to heights thereof to obtain a plurality of independent obstructions, and then acquire heights of the obstructions and bottom surface vertex coordinates of bottom surface vertices forming bottom surfaces of the obstructions, to obtain a space occupancy parameter of each obstruction.

Based on this, the server performs inward contraction and outward expansion on the obstruction based on the space occupancy parameter of the obstruction, to obtain data obtained after the inward contraction and the outward expansion are performed, that is, to obtain the error modeling data. As can be seen from the foregoing description, the space occupancy parameter includes a height and vertex coordinates. Therefore, in practical applications, the server may use a contour inward contraction and outward expansion algorithm (Cavalier Contours) for non-self-intersecting polygons to perform inward contraction and outward expansion according to the space occupancy parameter, to obtain error modeling data. Therefore, the error modeling data includes a height after the inward contraction and a height after the outward expansion, and vertex coordinates after the inward contraction and vertex coordinates after the outward expansion. The Cavalier Contours algorithm has better performance in numerical stability and in handling problems such as overlapping line segments and folded arcs, and can flexibly handle a plurality of complex situations such as curves, non-convex polygons, and self-intersections in practical applications, to ensure reliability of the error modeling data.

Operation 204: Determine, based on the error modeling data, a first space bounded by a first outer surface of the second model and a second outer surface of the third model. The wording of "a first space bounded by a first outer surface of the second model and a second outer surface of the third model" means that the first space is a three-dimensional volumetric region whose entire boundary is constituted solely by the first outer surface and the second outer surface. Specifically, the first outer surface and the second outer surface together form a closed boundary shell that encloses the first space. In a direction normal to the obstruction's external contour, the first space is confined between the first outer surface and the second outer surface.

In some embodiments, the computer device reconstructs the three-dimensional geometry of the second model and the third model from the error modeling data. As described above, the error modeling data comprises a first parameter indicating the second model and a second parameter indicating the third model. The first parameter may include the contracted vertex coordinates and the contracted height, while the second parameter may include the expanded vertex coordinates and the expanded height. Using these parameters, the outer surface of the second model obtained in this way constitutes the first outer surface, and the outer surface of the third model constitutes the second outer surface. Because the second model is generated by an inward contraction of the original first model and the third model is generated by an outward expansion of the same first model, the second model lies entirely inside the third model. Consequently, the first outer surface and the second outer surface together define a shell-like volumetric region between them.

In some embodiments, Operation 204 includes determining, based on the error modeling data, an inward contraction boundary determined through the inward contraction and an outward expansion boundary determined through the outward expansion, and construct an error space range of the obstruction by using the inward contraction boundary and the outward expansion boundary. The error space range is used to represent the first space.

The error space range includes the external contour of the obstruction. In addition, because there are a front view, a top view, and a side view for an obstruction, the external contour of the obstruction essentially includes: a front-view external contour, a top-view external contour, and a side-view external contour. The front view and the side view may be interchanged. That is, the original front view may be used as the side view and an original front-view contour may be used as a side-view contour, or the original side view may be used as the front view and an original side-view contour may be used as a front-view contour.

In some embodiments, the error space range includes at least a top-view error space range and a side-view error space range. The top-view error space range is a space range after outward expansion and inward contraction are performed on the top view. Because the external contour of the obstruction exists as a top-view external contour based on the top view, after outward expansion and inward contraction are performed on the top view, a top-view outward expansion boundary(i.e., top-view outer boundary) and a top-view inward contraction boundary(i.e., top-view inner boundary) corresponding to the top-view external contour can be obtained. Therefore, the top-view error space range is formed by a space range between the top-view outward expansion boundary and the top-view inward contraction boundary.

Similarly, the side-view error space range is a space range after outward expansion and inward contraction are performed on the side view. Because the external contour of the obstruction exists as a side-view external contour based on the side view, after outward expansion and inward contraction are performed on the side view, a side-view outward expansion boundary and a side-view inward contraction boundary corresponding to the side-view external contour can be obtained. Therefore, the side-view error space range is formed by a space range between the side-view outward expansion boundary and the side-view inward contraction boundary. In addition, in practical applications, the error space range may further include a front-view error space range. Similar to the above, the front-view error space range is a space range after outward expansion and inward contraction are performed on the front view. Because the external contour of the obstruction exists as a front-view external contour based on the front view, after outward expansion and inward contraction are performed on the front view, a front-view outward expansion boundary and a front-view inward contraction boundary corresponding to the front-view external contour can be obtained. Therefore, the front-view error space range is formed by a space range between the front-view outward expansion boundary and the front-view inward contraction boundary.

Specifically, the server determines, based on the error modeling data, an inward contraction boundary determined through the inward contraction and an outward expansion boundary determined through the outward expansion, and constructs an error space range of the obstruction by using the inward contraction boundary and the outward expansion boundary. As can be seen from the foregoing embodiments, the space occupancy parameter includes a height and vertex coordinates, and the error modeling data includes a height after the inward contraction and a height after the outward expansion, and vertex coordinates after the inward contraction and vertex coordinates after the outward expansion. Therefore, an outward expansion boundary after the outward expansion and an inward contraction boundary after the inward contraction can be obtained according to the height in the space occupancy parameter and the height after the inward contraction and the height after the outward expansion in the error modeling data, and the vertex coordinates in the space occupancy parameter and the vertex coordinates after the inward contraction and the vertex coordinates after the outward expansion in the error modeling data. Therefore, the space range between the outward expansion boundary and the inward contraction boundary is constructed as the error space range of the external contour.

In some embodiments, the determining, based on the error modeling data, an inward contraction boundary determined through the inward contraction and an outward expansion boundary determined through the outward expansion, and constructing an error space range of the obstruction by using the inward contraction boundary and the outward expansion boundary includes: constructing an outward expansion boundary of the obstruction according to the space occupancy parameter and the height after the outward expansion and the vertex coordinates after the outward expansion in the error modeling data; constructing an inward contraction boundary of the obstruction according to the space occupancy parameter and the height after the inward contraction and the vertex coordinates after the inward contraction in the error modeling data; and determining a space range between the outward expansion boundary and the inward contraction boundary as an error space range including the external contour of the obstruction.

For ease of understanding, as shown in FIG. 4, (A) in FIG. 4 shows the obstruction before inward contraction and outward expansion are performed. In this case, parameters of the obstruction include a height and vertex coordinates, and the black boundary in (A) in FIG. 4 is the external contour of the obstruction. By performing outward expansion on the obstruction shown in (A) in FIG. 4, a height after the outward expansion and vertex coordinates after the outward expansion can be obtained. In this case, the obstruction after the outward expansion shown in (B) in FIG. 4 can be constructed. In this case, the black boundary in (B) in FIG. 4 is an outward expansion boundary of the obstruction. Similarly, by performing inward contraction on the obstruction shown in (A) in FIG. 4, a height after the inward contraction and vertex coordinates after the inward contraction can be obtained. In this case, the obstruction after the inward contraction shown in (C) in FIG. 4 can be constructed. In this case, the black boundary in (C) in FIG. 4 is an inward contraction boundary of the obstruction.

Based on this, the obstruction shown in (A) in FIG. 4, the obstruction after the outward expansion shown in (B) in FIG. 4, and the obstruction after the inward contraction shown in (C) in FIG. 4 are compared in the same position relationship, to obtain an error space range shown in (D) in FIG. 4. As can be seen from (D) in FIG. 4, the error space range is a space range between the outward expansion boundary shown in (B) in FIG. 4 and the inward contraction boundary shown in (C) in FIG. 4, and the error space range includes the external contour shown in (A) in FIG. 4.

Operation 206: Acquire a candidate position of the object and a satellite position of a satellite; and determine, based on a linear signal propagation path between the satellite position and the candidate position, a first position relationship between the linear signal propagation path and the first space.

In some embodiments, Operation 206 includes: determining a top-view projection of the linear signal propagation path onto a top-view plane, and a top-view outer boundary(i.e., top-view outward expansion boundary ) and a top-view inner boundary(i.e., top-view inward contraction boundary) of the first space on the top-view plane, the top-view outer boundary corresponding to a projection of the third model on the top-view plane, and the top-view inner boundary corresponding to a projection of the second model on the top-view plane; determining the top-view position relationship based on an intersection status between the top-view projection and at least one of the top-view outer boundary and the top-view inner boundary; determining a side-view projection of the linear signal propagation path onto a side-view plane, and a side-view outer boundary and a side-view inner boundary of the first space on the side-view plane, the side-view outer boundary corresponding to a projection of the third model on the side-view plane, and the side-view inner boundary corresponding to a projection of the second model on the side-view plane; determining the side-view position relationship based on an intersection status between the side-view projection and at least one of the side-view outer boundary and the side-view inner boundary. The "top-view plane" is a horizontal projection plane parallel to the ground plane. The "side-view plane" is a vertical projection plane perpendicular to the top-view plane. Preferably, the orientation of the side-view plane is chosen to be perpendicular to an extension direction of the obstruction or parallel to a vertical face of the obstruction.

The term "intersection status" refers to whether the top-view projection line segment and the boundary polygon share at least one common point. Specifically, the intersection status is evaluated by testing: (1) if any endpoint of the projected segment lies inside the polygon, or (2) if any edge of the projected segment crosses any edge of the polygon. If either condition is met, the projected segment is considered to intersect the boundary. If the projected segment intersects the top-view outer boundary polygon, the top-view position relationship is further characterised by whether it also intersects the top-view inner boundary polygon. Thus, "determining the top-view position relationship based on an intersection status" encompasses: checking intersection with the top-view outer boundary; checking intersection with the top-view inner boundary; and assigning the relationship as "outer intersection only" or "inner intersection" depending on the outcomes of these checks. Similarly, for the side-view, the term "intersection status" refers to whether the side-view projection line segment and the side-view boundary polygon share at least one common point. The intersection status is evaluated by testing: (1) if any endpoint of the side-view projected segment lies inside the side-view polygon, or (2) if any edge of the projected segment crosses any edge of the polygon. If either condition is satisfied, the projected segment is considered to intersect the boundary. Then, "determining the side-view position relationship based on an intersection status" encompasses: checking intersection with the side-view outer boundary; checking intersection with the side-view inner boundary; and assigning the relationship as "outer intersection only" or "inner intersection" depending on the outcomes of these checks.

Candidate positions may be predicted based on historical satellite positioning positions of the to-be-positioned object. Specifically, several historical satellite positioning positions of the to-be-positioned object within a preset time period up to now may be used, and these historical satellite positioning positions are used to form a movement trajectory of the to-be-positioned object, thereby predicting at least one candidate position by using a trend of the movement trajectory and a positioning time. Candidate positions may be several discrete positions determined from a predicted area according to a preset policy.

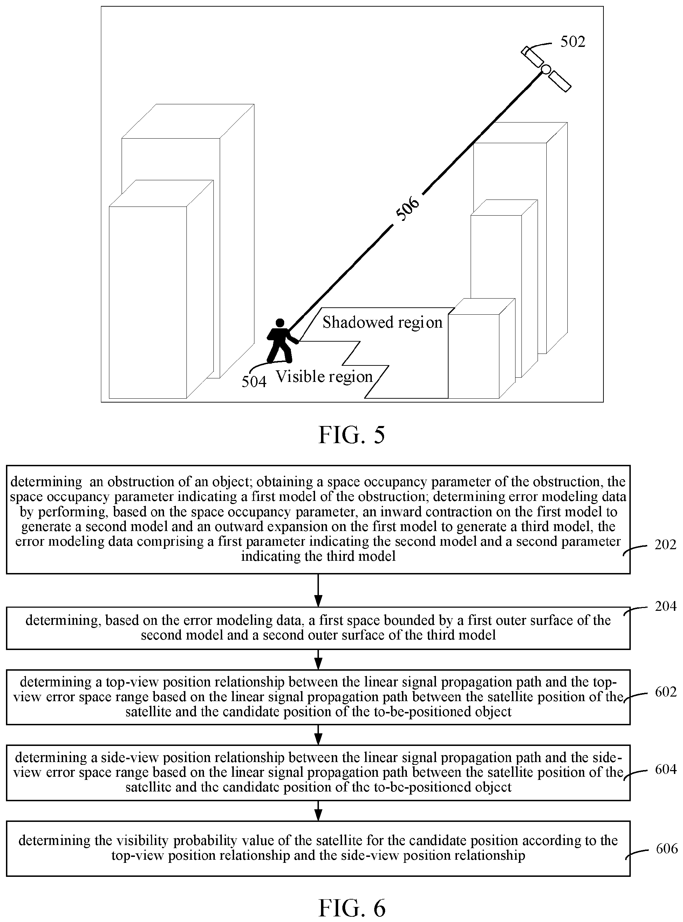

The linear signal propagation path is specifically a signal propagation path between the satellite position and the candidate position, and the signal propagation path is a straight line. For ease of understanding, as shown in FIG. 5, a signal straight line 506 connecting between a satellite position 502 of the satellite and a candidate position 504 of the to-be-positioned object is the linear signal propagation path between the satellite position 502 and the candidate position 504. In addition, as can be seen from FIG. 5, satellite signals may be shadowed by tall buildings. If the candidate position 504 of the to-be-positioned object is in a visible region, the satellite is a line-of-sight (LOS) satellite. Conversely, if the candidate position 504 of the to-be-positioned object is in a shadowed region, the satellite is a non-line-of-sight (NLOS) satellite.

Therefore, the first position relationship can describe at least: the linear signal propagation path intersects with or does not intersect with the error space range. In some embodiments, as can be seen from the foregoing description, the error space range includes at least the top-view error space range and the side-view error space range; the top-view error space range is formed by a space range between a top-view outward expansion boundary and a top-view inward contraction boundary; and the side-view error space range is formed by a space range between a side-view outward expansion boundary and a side-view inward contraction boundary. Therefore, for the first position relationship, the position relationship between the top-view projection of the linear signal propagation path onto the top-view error space range and the top-view error space range may be considered, and the position relationship between the side-view projection of the linear signal propagation path onto the side-view error space range and the side-view error space range may be considered. Therefore, the first position relationship includes the top-view position relationship and the side-view position relationship.

As can be seen from this, the top-view position relationship includes at least: a position relationship between the top-view projection of the linear signal propagation path onto the top-view error space range and the top-view outward expansion boundary, or a position relationship between the top-view projection and the top-view inward contraction boundary; and the side-view position relationship includes at least: a position relationship between the side-view projection of the linear signal propagation path onto the side-view error space range and the side-view outward expansion boundary, or a position relationship between the side-view projection and the side-view inward contraction boundary.

Because the error space range may further include the front-view error space range, for the first position relationship, the position relationship between a front-view projection of the linear signal propagation path onto the front-view error space range and the front-view error space range may further be considered, that is, the first position relationship may further include the front-view position relationship. In addition, the front-view position relationship includes at least: a position relationship between the front-view projection of the linear signal propagation path onto the front-view error space range and the front-view outward expansion boundary, or a position relationship between the front-view projection and the front-view inward contraction boundary.

Specifically, the server first determines the satellite position of the satellite and the candidate position of the to-be-positioned object. The satellite position of the satellite is determined by using a satellite ephemeris. The satellite ephemeris is a dataset of predicted satellite states broadcast to the ground periodically by the satellite. Therefore, a satellite positioning enhancement service provider receives the satellite within an observable range in real time based on a large quantity of highly sensitive fixed satellite receiving base stations, and after analysis, processing, and coding by an internal high-precision positioning service processing platform thereof, various correction parameters are released for various observation parameters, representation parameters, atmospheric corrections, and the like of the satellite based on the satellite and specified ephemeris coding of the satellite. Therefore, the satellite positioning enhancement service provider obtains the corresponding satellite ephemeris data according to the satellite ephemeris coding. Therefore, the satellite position may be calculated according to the satellite ephemeris data and various error correction parameters provided by the satellite enhancement provider. Secondly, the candidate position of the to-be-positioned object is predetermined by using the shadow matching algorithm. In practical applications, other algorithms may alternatively be used to determine the candidate position of the to-be-positioned object, which is not limited herein. Further, the server determines a linear signal propagation path between the satellite position and the candidate position, and then determines a first position relationship between the linear signal propagation path and the error space range.

Operation 208: Determine a visibility probability value of the satellite for the candidate position according to the first position relationship, the visibility probability value being configured for determining a position of the object.

In some embodiments, operation 208 includes: determining the visibility probability value of the satellite for the candidate position according to the top-view position relationship and the side-view position relationship.

In some embodiments, the top-view position relationship comprises: a second position relationship between a top-view projection of the linear signal propagation path onto a top-view plane and one of a top-view outer boundary and a top-view inner boundary of the first space on the top-view plane. The side-view position relationship comprises: a third position relationship between a side-view projection of the linear signal propagation path onto the side-view plane and one of a side-view outer boundary and a side-view inner boundary of the first space on the side-view plane.

In some embodiments, the determining the visibility probability value comprises: in a case that the top-view projection intersects with the top-view outer boundary and does not intersect with the top-view inner boundary, and the side-view projection intersects with the side-view outer boundary and does not intersect with the side-view inner boundary, acquiring a top-view visibility probability value based on a geometric relationship between the top-view projection and the top-view inner boundary; and obtaining a side-view visibility probability value based on a geometric relationship between the side-view projection and the side-view inner boundary; and performing a product calculation on the top-view visibility probability value and the side-view visibility probability value to obtain the visibility probability value of the satellite for the candidate position. As used herein, the "geometric relationship between the top-view projection and the top-view inner boundary" comprises at least the following geometric quantities: the closest vertex of the top-view external contour to the top-view projection; the corresponding top-view inner vertex and top-view outer vertex; a perpendicular distance d₁ from the top-view projection to the line segment connecting the top-view inner vertex and the top-view outer vertex; and the distance m between the top-view inner vertex and the top-view outer vertex. The top-view visibility probability value is then acquired by computing a function of these geometric quantities, for example according to Formula (1): P₁ = -0.5/m · d₁ + 1.

In some embodiments, the acquiring the top-view visibility probability value comprises: determining, from vertices of a top-view external contour of the first model, a top-view vertex closest to the top-view projection; determining a top-view inner vertex corresponding to the top-view vertex, the top-view inner vertex lying on the top-view inner boundary; determining a top-view outer vertex corresponding to the top-view vertex, the top-view outer vertex lying on the top-view outer boundary; determining a top-view perpendicular distance from the top-view inner vertex to the top-view projection, and a top-view vertex distance between the top-view inner vertex and the top-view outer vertex; and calculating the top-view visibility probability value based on a first ratio of the top-view perpendicular distance to the top-view vertex distance, the first ratio being negatively correlated with the top-view visibility probability value. Specifically, the first ratio of the top-view perpendicular distance d₁ to the top-view vertex distance m is computed. Because the ratio is negatively correlated with the top-view visibility probability value, the probability value may be calculated as P₁ = 1 - k·(d₁/m), where k is a scaling coefficient. In the present embodiment, k is chosen as 0.5 (see Formula (1)). The same principle applies mutatis mutandis to the side-view visibility probability value, where a coefficient of 0.7 and an offset of 0.9 are employed (see Formula (2)). The selection of these coefficients is based on empirical calibration with real-world positioning data, but other values may be used as long as the resulting probability decreases monotonically with increasing perpendicular distance.

In some embodiments, the obtaining a side-view visibility probability value based on a geometric relationship between the side-view projection and the side-view inner boundary comprises: determining, from vertices of a side-view external contour of the first model, a side-view vertex closest to the side-view projection; determining a side-view inner vertex corresponding to the side-view vertex, the side-view inner vertex lying on the side-view inner boundary; determining a side-view outer vertex corresponding to the side-view vertex, the side-view outer vertex lying on the side-view outer boundary; determining a side-view perpendicular distance from the side-view inner vertex to the side-view projection, and a side-view vertex distance between the side-view inner vertex and the side-view outer vertex; and calculating the side-view visibility probability value based on a second ratio of the side-view perpendicular distance to the side-view vertex distance, the second ratio being negatively correlated with the side-view visibility probability value. In some embodiments, the determining a visibility probability value of the satellite for the candidate position according to the first position relationship comprises: in a case that the top-view projection does not intersect with the top-view outer boundary and the side-view projection does not intersect with the side-view outer boundary, determining a preset maximum visibility probability value as a visibility probability value of the satellite for the candidate position; in a case that the top-view projection intersects with the top-view inner boundary and the side-view projection intersects with the side-view inner boundary, determining a preset minimum visibility probability value as the visibility probability value of the satellite for the candidate position. The preset maximum visibility probability value is, for example, 0.9. The preset minimum visibility probability value is, for example, 0.1.

In some embodiments, the determining a visibility probability value of the satellite for the candidate position according to the first position relationship comprises: calculating, for each of a plurality of the obstructions, a candidate visibility probability value based on a respective first position relationship; and selecting a smallest one of the candidate visibility probability values as the visibility probability value of the satellite for the candidate position.

The visibility probability value represents the probability that the candidate position is visible below the satellite in a case that there is an obstruction affecting the satellite's positioning on the to-be-positioned object, and the visibility probability value is configured for positioning the to-be-positioned object. The visibility probability value may be used as a score for visibility scoring. In some embodiments, the visibility probability value may be used through a method of use of scores for visibility scoring in conventional technologies.

Specifically, the server considers a first position relationship to determine the probability that the candidate position is visible below the satellite, that is, to acquire the visibility probability value of the candidate position. Therefore, the server performs positioning on the to-be-positioned object based on the visibility probability value. In some embodiments, the process of performing positioning on the to-be-positioned object based on the visibility probability value is implemented according to the shadow matching positioning algorithm. That is, the server calculates a distance between the to-be-positioned object and the satellite according to received satellite observation data, and then performs optimal estimation in combination with the visibility probability value obtained according to a signal-to-noise ratio and this application, to obtain a satellite positioning position. In some embodiments, the visibility probability value determined according to the present method is used as a matching score within a shadow matching positioning framework. Specifically, for each of a plurality of candidate positions, a visibility probability value is calculated for each visible satellite. These satellite-specific probability values are then combined into an overall matching score for the candidate position, which reflects the degree of agreement between the predicted satellite visibility pattern at that candidate position and the actual observed satellite visibility states. A final estimated position of the object is then derived from the candidate positions based on their respective overall matching scores. For example, the candidate position with the highest overall matching score may be selected as the satellite-based positioning result. Alternatively, a weighted average of the candidate positions may be computed using the overall matching scores as weights, thereby achieving sub-grid accuracy.

In some embodiments, whether the visibility probability value is greater than or equal to a preset threshold may be determined. If yes, the candidate position is determined as a satellite positioning position of the to-be-positioned object. Further, if not, the candidate position is not determined as a satellite positioning position of the to-be-positioned object. The preset threshold may be manually set according to actual needs or determined according to actual testing conditions.

In some embodiments, for a plurality of candidate positions, a candidate position with the largest visibility probability value may be determined as a satellite positioning position of the to-be-positioned object.

In some embodiments, for a plurality of candidate positions, a candidate position with the largest visibility probability value, which is greater than or equal to a preset threshold, may be determined as the satellite positioning position of the to-be-positioned object. The preset threshold may be manually set according to actual needs or determined according to actual testing conditions.

In some embodiments, for a plurality of candidate positions, a visibility probability value corresponding to each candidate position may be determined as a weight of the candidate position, so that weighted summation is performed on the plurality of candidate positions according to their respective weights, to obtain a satellite positioning position of the to-be-positioned object. In other embodiments, weighted summation may alternatively be performed only on candidate positions corresponding to visibility probability values exceeding the preset threshold. The preset threshold may be manually set according to actual needs or determined according to actual testing conditions. The preset threshold may be the same or different.

All examples in this embodiment are only for understanding this solution, and the specific settings need to be flexibly determined based on the actual situation.

In the foregoing visibility probability determining method, in a case that there is an obstruction affecting the satellite's positioning on the to-be-positioned object, error modeling data is obtained through inward contraction and outward expansion, an inward contraction boundary determined through the inward contraction and an outward expansion boundary determined through the outward expansion are determined based on the error modeling data, and an error space range of the obstruction is constructed by using the inward contraction boundary and the outward expansion boundary, so that the error space range can describe an actual shadowed area of the obstruction more completely and precisely. Therefore, a first position relationship between the linear signal propagation path and the error space range is determined, and different first position relationships are considered to determine a visibility probability value of the satellite for the candidate position. Because the visibility probability value does not directly describe whether a candidate position is visible or invisible as that in the conventional binary manner, but allows for a data error of the obstruction in a percentage probability manner, the visibility probability value can more flexibly and accurately describe a shadowing relationship between the obstruction and the candidate position. Therefore, based on improvement of accuracy of the visibility probability value, by positioning the to-be-positioned object based on the foregoing visibility probability value, the accuracy of object positioning can be improved.

The following will describe a specific manner of determining a first position relationship in a case of considering that the error space range includes a top-view error space range and a side-view error space range in detail: In some embodiments, as shown in FIG. 6, the error space range includes a top-view error space range and a side-view error space range. Based on this, the acquiring a candidate position of the to-be-positioned object, and determining, based on a linear signal propagation path between a satellite position of a satellite and the candidate position, a first position relationship between the linear signal propagation path and the error space range includes:
Operation 602: Determine a top-view position relationship between the linear signal propagation path and the top-view error space range based on the linear signal propagation path between the satellite position of the satellite and the candidate position of the to-be-positioned object.

The top-view position relationship is specifically a position relationship between the top-view projection of the linear signal propagation path onto the top-view error space range and the top-view error space range. As can be seen from the foregoing description, the top-view error space range is formed by a space range between the top-view outward expansion boundary and the top-view inward contraction boundary. Therefore, the top-view position relationship specifically includes: a position relationship between the top-view projection of the linear signal propagation path onto the top-view error space range and the top-view outward expansion boundary, and a position relationship between the top-view projection of the linear signal propagation path onto the top-view error space range and the top-view inward contraction boundary.

In some embodiments, the determining a top-view position relationship between the linear signal propagation path and the top-view error space range based on the linear signal propagation path between the satellite position of the satellite and the candidate position of the to-be-positioned object includes: projecting the linear signal propagation path between the satellite position of the satellite and the candidate position of the to-be-positioned object onto the top-view error space range, to obtain a top-view projection of the linear signal propagation path onto the top-view error space range; and determining a top-view position relationship between the top-view projection and the top-view error space range.

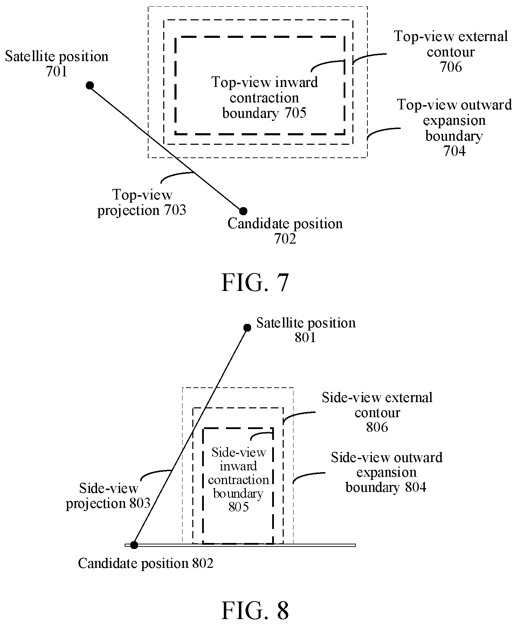

That is, the server first projects the linear signal propagation path between the satellite position of the satellite and the candidate position of the to-be-positioned object onto the top-view error space range, and a top-view projection of the linear signal propagation path onto the top-view error space range can be obtained. Therefore, the server determines the top-view position relationship between the top-view projection and the top-view error space range. For ease of understanding, as shown in FIG. 7, by projecting a linear signal propagation path between a satellite position 701 of the satellite and a candidate position 702 of the to-be-positioned object onto the top-view error space range, a top-view projection 703 can be obtained. The top-view error space range is specifically formed by a space range between a top-view outward expansion boundary 704 and a top-view inward contraction boundary 705, and the top-view error space range includes a top-view external contour 706. As can be seen from FIG. 7, the top-view projection 703 may have position relationships with the top-view outward expansion boundary 704 and the top-view inward contraction boundary 705 in the top-view error space range. That is, the top-view position relationship includes: a position relationship between the top-view projection 703 and the top-view outward expansion boundary 704, and a position relationship between the top-view projection 703 and the top-view inward contraction boundary 705.

Operation 604: Determine a side-view position relationship between the linear signal propagation path and the side-view error space range based on the linear signal propagation path between the satellite position of the satellite and the candidate position of the to-be-positioned object.

The side-view position relationship is specifically: a position relationship between the side-view projection of the linear signal propagation path onto the side-view error space range and the side-view error space range. As can be seen from the foregoing description, the side-view error space range is formed by a space range between the side-view outward expansion boundary and the side-view inward contraction boundary. Therefore, the side-view position relationship specifically includes: a position relationship between the side-view projection of the linear signal propagation path onto the side-view error space range and the side-view outward expansion boundary, and a position relationship between the side-view projection of the linear signal propagation path onto the side-view error space range and the side-view inward contraction boundary.

In some embodiments, the determining a side-view position relationship between the linear signal propagation path and the side-view error space range based on the linear signal propagation path between the satellite position of the satellite and the candidate position of the to-be-positioned object includes: projecting the linear signal propagation path between the satellite position of the satellite and the candidate position of the to-be-positioned object onto the side-view error space range, to obtain a side-view projection of the linear signal propagation path onto the side-view error space range; and determining a side-view position relationship between the side-view projection and the side-view error space range.

That is, the server first projects the linear signal propagation path between the satellite position of the satellite and the candidate position of the to-be-positioned object onto the side-view error space range, and a side-view projection of the linear signal propagation path onto the side-view error space range can be obtained. Therefore, the server determines the side-view position relationship between the side-view projection and the side-view error space range. For ease of understanding, as shown in FIG. 8, by projecting a linear signal propagation path between a satellite position 801 of the satellite and a candidate position 802 of the to-be-positioned object onto the side-view error space range, a side-view projection 803 can be obtained. The side-view error space range is specifically formed by a space range between a side-view outward expansion boundary 804 and a side-view inward contraction boundary 805, and the side-view error space range includes a side-view external contour 806. As can be seen from FIG. 7, the side-view projection 803 may have position relationships with the side-view outward expansion boundary 804 and the side-view inward contraction boundary 805 in the side-view error space range. That is, the side-view position relationship includes: a position relationship between the side-view projection 803 and the side-view outward expansion boundary 804, and a position relationship between the side-view projection 803 and the side-view inward contraction boundary 805.

In addition, the determining a visibility probability value of the satellite for the candidate position according to the first position relationship includes:
Operation 606: Determine the visibility probability value of the satellite for the candidate position according to the top-view position relationship and the side-view position relationship.

Specifically, because the first position relationship includes the top-view position relationship and the side-view position relationship, the server specifically determines the visibility probability value of the satellite for the candidate position according to the top-view position relationship and the side-view position relationship. All examples in this embodiment are only for understanding this solution, and the specific settings need to be flexibly determined based on the actual situation.

In some embodiments, specifically, considering the case in which the error space range includes the top-view error space range and the side-view error space range, the first position relationship between the linear signal propagation path and the error space range is determined more accurately based on the top-view projection of the linear signal propagation path onto the top-view error space range and the side-view projection of the linear signal propagation path onto the side-view error space range. That is, the visibility probability value can be determined from two dimensions: the top-view position relationship and the side-view position relationship, which further improves the accuracy of determining the visibility probability value, thereby improving the accuracy of object positioning based on the visibility probability value.

As can be seen from the foregoing embodiments, because the first position relationship includes the top-view position relationship and the side-view position relationship, a specific implementation for determining the visibility probability value of the satellite for the candidate position according to the top-view position relationship and the side-view position relationship in the position relationship will be described below in detail:

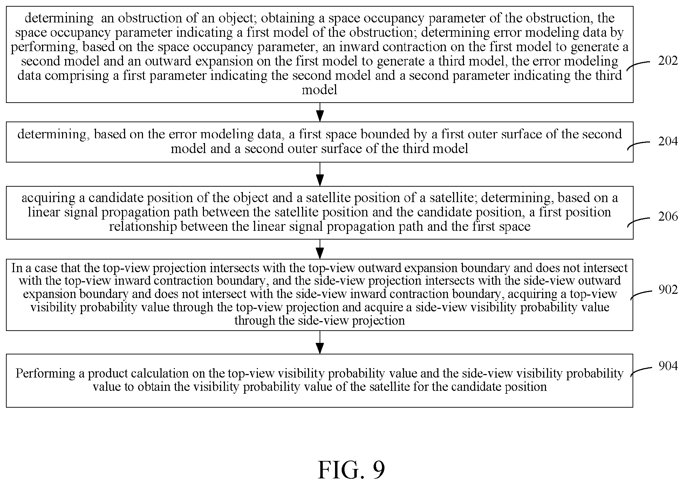

In some embodiments, as shown in FIG. 9, the determining a visibility probability value of the satellite for the candidate position according to the first position relationship includes:
Operation 902: In a case that the top-view projection intersects with the top-view outward expansion boundary and does not intersect with the top-view inward contraction boundary, and the side-view projection intersects with the side-view outward expansion boundary and does not intersect with the side-view inward contraction boundary, acquire a top-view visibility probability value through the top-view projection and acquire a side-view visibility probability value through the side-view projection.

The top-view visibility probability value represents a probability that the candidate position is visible below the satellite for the top-view error space range. Similarly, the side-view visibility probability value represents a probability that the candidate position is visible below the satellite for the side-view error space range. Specifically, in a case that the top-view projection intersects with the top-view outward expansion boundary and does not intersect with the top-view inward contraction boundary, the top-view projection is specifically within the space range between the top-view inward contraction boundary and the top-view outward expansion boundary. For ease of understanding, referring to FIG. 7 again, the top-view projection 703 and the top-view outward expansion boundary 704 shown in FIG. 7 intersect with each other, and the top-view projection 703 does not intersect with the top-view inward contraction boundary 705. That is, the top-view projection 703 is within the space range between the top-view outward expansion boundary 704 and the top-view inward contraction boundary 705. Therefore, the server acquires the top-view visibility probability value through the top-view projection.

In some embodiments, the top-view error space range includes a top-view external contour of the obstruction. Based on this, the acquiring a top-view visibility probability value through the top-view projection includes: determining a top-view vertex closest to the top-view projection from the top-view external contour, and determining a top-view inward contraction vertex corresponding to the top-view vertex and a top-view outward expansion vertex corresponding to the top-view vertex from the top-view inward contraction boundary; determining a top-view vertical distance between the top-view projection and the top-view inward contraction vertex, and a top-view vertex distance between the top-view inward contraction vertex and the top-view outward expansion vertex, the top-view vertical distance representing a distance by which the top-view projection is shadowed within the top-view error space range, and the top-view vertex distance representing a maximum shadow distance of the top-view projection within the top-view error space range; and calculating the top-view visibility probability value based on the top-view vertical distance and the top-view vertex distance, a ratio between the top-view vertical distance and the top-view vertex distance being negatively correlated with the top-view visibility probability value.

The top-view external contour is formed by a plurality of top-view external contour vertices, and the top-view vertex is a top-view external contour vertex closest to the top-view projection among the plurality of top-view external contour vertices. Based on this, because the top-view inward contraction boundary is constructed according to the space occupancy parameter for the top view, the height after the inward contraction, and the vertex coordinates after the inward contraction, the top-view inward contraction boundary is formed by a plurality of top-view inward contraction vertices, and each top-view inward contraction vertex is obtained based on inward contraction on a top-view external contour vertex, that is, each top-view external contour vertex has a corresponding top-view inward contraction vertex. Similarly, because the top-view outward expansion boundary is constructed according to the space occupancy parameter for the top view, the height after the outward expansion, and the vertex coordinates after the outward expansion, the top-view outward expansion boundary is formed by a plurality of top-view outward expansion vertices, and each top-view outward expansion vertex is obtained based on outward expansion on a top-view external contour vertex, that is, each top-view external contour vertex has a corresponding top-view outward expansion vertex.

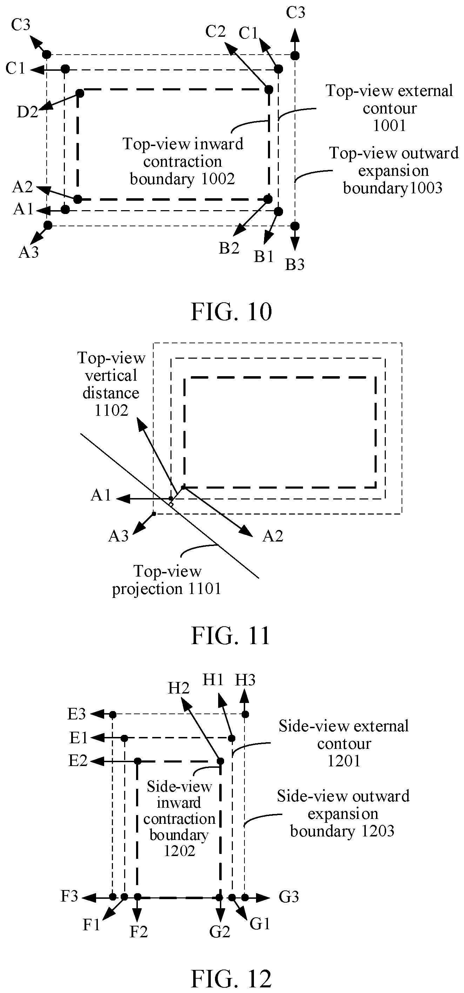

For ease of understanding, as shown in FIG. 10, the top-view error space range includes a top-view external contour 1001 of the obstruction, while the top-view error space range is a space range between a top-view inward contraction boundary 1002 and a top-view outward expansion boundary 1003. Based on this, the top-view external contour 1001 is formed by a top-view external contour vertex A1, a top-view external contour vertex B1, a top-view external contour vertex C1, and a top-view external contour vertex D1; the top-view inward contraction boundary 1002 is formed by a top-view inward contraction vertex A2, a top-view inward contraction vertex B2, a top-view inward contraction vertex C2, and a top-view inward contraction vertex D2; and the top-view outward expansion boundary 1002 is formed by a top-view outward expansion vertex A3, a top-view outward expansion vertex B3, a top-view outward expansion vertex C3, and a top-view outward expansion vertex D3. As can be seen from FIG. 10, the top-view external contour vertex A1 corresponds to the top-view inward contraction vertex A2 and the top-view outward expansion vertex A3. Similarly, the top-view external contour vertex B1 corresponds to the top-view inward contraction vertex B2 and the top-view outward expansion vertex B3; the top-view external contour vertex C1 corresponds to the top-view inward contraction vertex C2 and the top-view outward expansion vertex C3; and the top-view external contour vertex D1 corresponds to the top-view inward contraction vertex D2 and the top-view outward expansion vertex D3.

Based on this, the top-view vertical distance is a vertical distance between the top-view projection and the top-view inward contraction vertex, while the top-view vertex distance is a vertex distance between the top-view inward contraction vertex and the top-view outward expansion vertex. In addition, the top-view vertical distance represents a distance by which the top-view projection is shadowed within the top-view error space range, and the top-view vertex distance represents a maximum shadow distance of the top-view projection within the top-view error space range. For ease of understanding, a description is provided with reference to the examples in FIG. 7 and FIG. 10. As shown in FIG. 11, a top-view projection 1101 is closest to the top-view external contour vertex A1. Therefore, the top-view external contour vertex A1 may be determined as a top-view vertex, and the top-view vertex (top-view external contour vertex A1) corresponds to the top-view inward contraction vertex A2 and the top-view outward expansion vertex A3. In this case, a vertical distance between the top-view inward contraction vertex A2 and the top-view projection 1101 is first calculated, and a top-view vertical distance 1102 can be obtained; and then a straight line is drawn between the top-view inward contraction vertex A2 and the top-view outward expansion vertex A3, and a top-view vertex distance can be obtained.

Further, the top-view visibility probability value is calculated based on the top-view vertical distance and the top-view vertex distance, and a ratio between the top-view vertical distance and the top-view vertex distance is negatively correlated with the top-view visibility probability value. A specific calculation manner is shown in the example in Formula (1): ${P}_{1} = - \frac{0.5}{m} {d}_{1} + 1 ;$ (1)
where P₁ is the top-view visibility probability value, d₁ is the top-view vertical distance, and m is the top-view vertex distance.

Further, in a case that the side-view projection intersects with the side-view outward expansion boundary and does not intersect with the side-view inward contraction boundary, the side-view projection is specifically within the space range between the side-view inward contraction boundary and the side-view outward expansion boundary. For ease of understanding, referring to FIG. 8 again, the side-view projection 803 and the side-view outward expansion boundary 804 shown in FIG. 8 intersect with each other, and the side-view projection 803 does not intersect with the side-view inward contraction boundary 805. That is, the side-view projection 803 is within the space range between the side-view outward expansion boundary 804 and the side-view inward contraction boundary 805. Therefore, the server acquires the side-view visibility probability value through side-view projection.

In some embodiments, the side-view error space range includes a side-view external contour of the obstruction. Based on this, the acquiring a side-view visibility probability value through the side-view projection includes: determining a side-view vertex closest to the side-view projection from the side-view external contour, and determining a side-view inward contraction vertex corresponding to the side-view vertex and a side-view outward expansion vertex corresponding to the side-view vertex from the side-view inward contraction boundary; determining a side-view vertical distance between the side-view projection and the side-view inward contraction vertex, and a side-view vertex distance between the side-view inward contraction vertex and the side-view outward expansion vertex, the side-view vertical distance representing a distance by which the side-view projection is shadowed within the side-view error space range, and the side-view vertex distance representing a maximum shadow distance of the side-view projection within the side-view error space range; and calculating the side-view visibility probability value based on the side-view vertical distance and the side-view vertex distance, a ratio between the side-view vertical distance and the side-view vertex distance being negatively correlated with the side-view visibility probability value.

The side-view external contour is formed by a plurality of side-view external contour vertices, and the side-view vertex is a side-view external contour vertex closest to the side-view projection among the plurality of side-view external contour vertices. Based on this, because the side-view inward contraction boundary is constructed according to the space occupancy parameter for the side view, the height after the inward contraction, and the vertex coordinates after the inward contraction, the side-view inward contraction boundary is formed by a plurality of side-view inward contraction vertices, and each side-view inward contraction vertex is obtained based on inward contraction on a side-view external contour vertex, that is, each side-view external contour vertex has a corresponding side-view inward contraction vertex. Similarly, because the side-view outward expansion boundary is constructed according to the space occupancy parameter for the side view, the height after the outward expansion, and the vertex coordinates after the outward expansion, the side-view outward expansion boundary is formed by a plurality of side-view outward expansion vertices, and each side-view outward expansion vertex is obtained based on outward expansion on a side-view external contour vertex, that is, each side-view external contour vertex has a corresponding side-view outward expansion vertex.

For ease of understanding, as shown in FIG. 12, the side-view error space range includes a side-view external contour 1201 of the obstruction, while the side-view error space range is a space range between a side-view inward contraction boundary 1202 and a side-view outward expansion boundary 1203. Based on this, the side-view external contour 1201 is formed by a side-view external contour vertex E1, a side-view external contour vertex F1, a side-view external contour vertex G1, and a side-view external contour vertex H1; the side-view inward contraction boundary 1202 is formed by a side-view inward contraction vertex E2, a side-view inward contraction vertex F2, a side-view inward contraction vertex G2, and a side-view inward contraction vertex H2; and the side-view outward expansion boundary 1202 is formed by a side-view outward expansion vertex E3, a side-view outward expansion vertex F3, a side-view outward expansion vertex G3, and a side-view outward expansion vertex H3. As can be seen from FIG. 12, the side-view external contour vertex E1 corresponds to the side-view inward contraction vertex E2 and the side-view outward expansion vertex E3. Similarly, the side-view external contour vertex F1 corresponds to the side-view inward contraction vertex F2 and the side-view outward expansion vertex F3; the side-view external contour vertex G1 corresponds to the side-view inward contraction vertex G2 and the side-view outward expansion vertex G3; and the side-view external contour vertex H1 corresponds to the side-view inward contraction vertex H2 and the side-view outward expansion vertex H3.

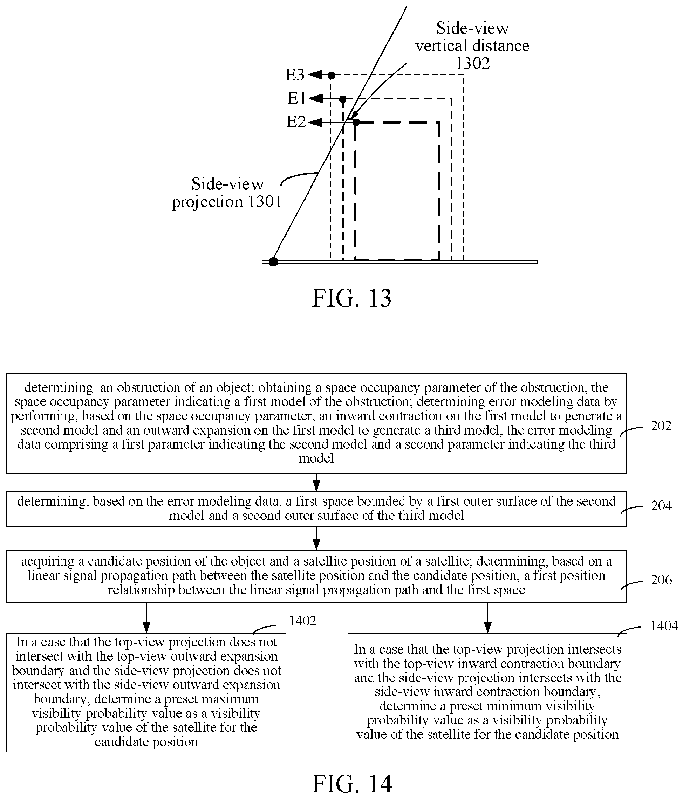

Based on this, the side-view vertical distance is a vertical distance between the side-view projection and the side-view inward contraction vertex, while the side-view vertex distance is a vertex distance between the side-view inward contraction vertex and the side-view outward expansion vertex. In addition, the side-view vertical distance represents a distance by which the side-view projection is shadowed within the side-view error space range, and the side-view vertex distance represents a maximum shadow distance of the side-view projection within the side-view error space range. For ease of understanding, a description is provided with reference to the examples in FIG. 8 and FIG. 12. As shown in FIG. 13, a side-view projection 1301 is closest to the side-view external contour vertex E1. Therefore, the side-view external contour vertex E1 may be determined as a side-view vertex, and the side-view vertex (side-view external contour vertex E1) corresponds to the side-view inward contraction vertex E2 and the side-view outward expansion vertex E3. In this case, a vertical distance between the side-view inward contraction vertex E2 and the side-view projection 1301 is first calculated, and a side-view vertical distance 1302 can be obtained; and then a straight line is drawn between the side-view inward contraction vertex E2 and the side-view outward expansion vertex E3, and a side-view vertex distance can be obtained.

Further, the side-view visibility probability value is calculated based on the side-view vertical distance and the side-view vertex distance, and a ratio between the side-view vertical distance and the side-view vertex distance is negatively correlated with the side-view visibility probability value. A specific calculation manner is shown in the example in Formula (2): ${P}_{2} = - \frac{0.7}{n} {d}_{2} + 0.9 ;$ (2)
where P₂ is the side-view visibility probability value, d₂ is the side-view vertical distance, and n is the side-view vertex distance.

Operation 904: Perform a product calculation on the top-view visibility probability value and the side-view visibility probability value to obtain the visibility probability value of the satellite for the candidate position.

Specifically, the server performs a product calculation on the top-view visibility probability value and the side-view visibility probability value to obtain the visibility probability value of the satellite for the candidate position. That is, the server multiplies the top-view visibility probability value by the side-view visibility probability value to obtain the visibility probability value of the satellite for the candidate position. The specific calculation manner is shown in the example in Formula (3): $p \left(LOS\left|BB\right.\right) = {P}_{1} ⋅ {P}_{2} ;$ (3)
where p(LOS|BB) is the visibility probability value, P₁ is the top-view visibility probability value, and P₂ is the side-view visibility probability value.

All examples in this embodiment are only for understanding this solution, and the specific settings need to be flexibly determined based on the actual situation.

In some embodiments, considering the case in which the projection of the linear signal propagation path intersects with the outward expansion boundary and does not intersect with the inward contraction boundary, there is indeed an obstruction shadowing signal transmission between the satellite and the to-be-positioned object. In this case, a distance by which the projection of the linear signal propagation path is shadowed in a blurred region and a maximum shadow distance of the projection in the top-view error space range are considered, to obtain a visible proportion of the projection of the linear signal propagation path in the blurred region. Because the proportion is negatively correlated with the visibility probability value, that is, a shorter distance by which the projection is shadowed in the blurred region indicates more visible regions of the projection in the blurred region. Therefore, based on the visibility probability values of the blurred region in two dimensions, the top-view visibility probability value and the side-view visibility probability value, the visibility probability value of the candidate position is determined, further improving the accuracy of determining the visibility probability value, thereby improving the accuracy of object positioning based on the visibility probability value.

In some embodiments, as shown in FIG. 14, the determining a visibility probability value of the satellite for the candidate position according to the first position relationship includes:
Operation 1402: In a case that the top-view projection does not intersect with the top-view outward expansion boundary and the side-view projection does not intersect with the side-view outward expansion boundary, determine a preset maximum visibility probability value as a visibility probability value of the satellite for the candidate position.

The preset maximum visibility probability value represents a visibility probability value in a case that the obstruction does not shadow the linear signal propagation path, and the preset maximum visibility probability value is a value close to 1. However, considering that there may be other obstructions or positioning influence factors in actual applications, the preset maximum visibility probability value is 0.9 in some embodiments.

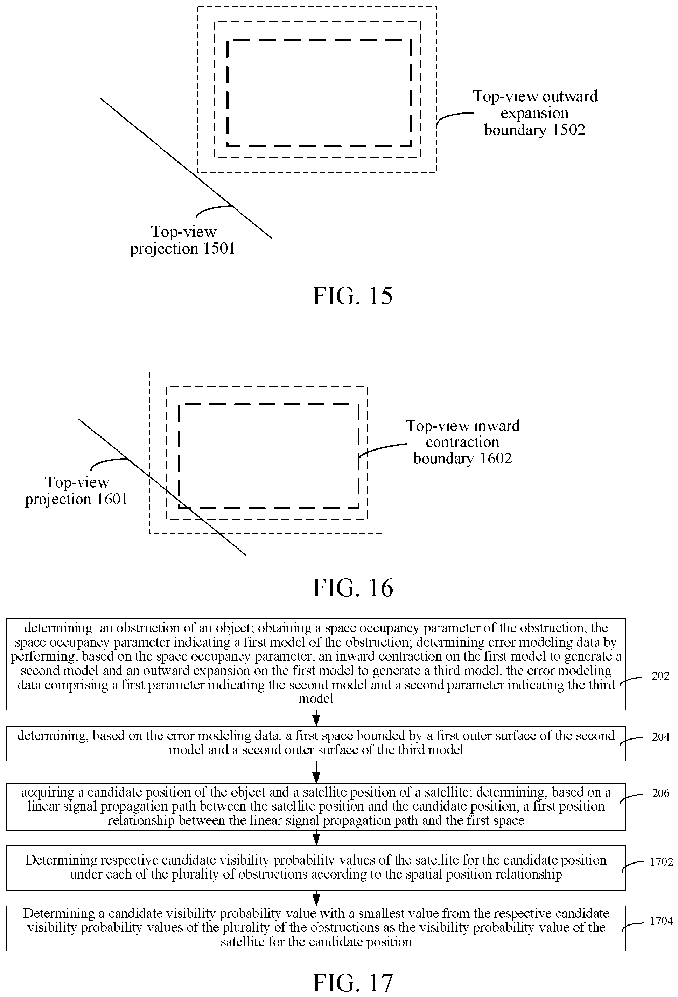

Specifically, in a case that the top-view projection does not intersect with the top-view outward expansion boundary, the top-view projection of the linear signal propagation path onto the top-view error space range does not intersect with the top-view error space range. In this case, the obstruction within the top-view error space range does not cause shadow influence on the linear signal propagation path. For ease of understanding, as shown in FIG. 15, a top-view projection 1501 of the linear signal propagation path onto the top-view error space range does not intersect with a top-view outward expansion boundary 1502 of the top-view error space range. Similarly, in a case that the side-view projection does not intersect with the side-view outward expansion boundary, the side-view projection of the linear signal propagation path onto the side-view error space range does not intersect with the side-view error space range. In this case, the obstruction within the side-view error space range does not cause shadow influence on the linear signal propagation path. The specific example is similar to FIG. 15, and details are not described herein again. Therefore, in this case, the server determines the preset maximum visibility probability value as a visibility probability value of the satellite for the candidate position. If the preset maximum visibility probability value in some embodiments is 0.9, the visibility probability value of the satellite for the candidate position is 0.9.

Operation 1404: In a case that the top-view projection intersects with the top-view inward contraction boundary and the side-view projection intersects with the side-view inward contraction boundary, determine a preset minimum visibility probability value as a visibility probability value of the satellite for the candidate position.

The preset minimum visibility probability value represents a visibility probability value in a case that the obstruction shadows the linear signal propagation path and has the greatest influence. The preset minimum visibility probability value is a value close to 0. However, considering that there may be other positioning influence factors in actual applications, the preset minimum visibility probability value is 0.1 in some embodiments.

Specifically, in a case that the top-view projection intersects with the top-view inward contraction boundary, the top-view projection of the linear signal propagation path onto the top-view error space range intersects with the top-view error space range, and the intersection with the top-view inward contraction boundary indicates that the obstruction within the top-view error space range causes relatively great shadow influence to the linear signal propagation path. For ease of understanding, as shown in FIG. 16, a top-view projection 1601 of the linear signal propagation path onto the top-view error space range intersects with a top-view inward contraction boundary 1602 of the top-view error space range. Similarly, in a case that the side-view projection intersects with the side-view inward contraction boundary, the side-view projection of the linear signal propagation path onto the side-view error space range intersects with the side-view error space range, and the intersection with the side-view inward contraction boundary indicates that the obstruction within the side-view error space range causes relatively great shadow influence to the linear signal propagation path. The specific example is similar to FIG. 16, and details are not described herein again. Therefore, in this case, the server determines the preset minimum visibility probability value as a visibility probability value of the satellite for the candidate position. If the preset minimum visibility probability value in some embodiments is 0.1, the visibility probability value of the satellite for the candidate position is 0.1.

All examples In some embodiments are only for understanding this solution, and the specific settings need to be flexibly determined based on the actual situation.

In some embodiments, the case in which the projection of the linear signal propagation path does not intersect with the outward expansion boundary is considered, which indicates that the obstruction does not shadow the linear signal propagation path. Therefore, the preset maximum visibility probability value is determined as the visibility probability value of the satellite for the candidate position. Secondly, considering that in a case that the projection of the linear signal propagation path intersects with the inward contraction boundary, the obstruction within the blurred region causes relatively great shadow influence to the linear signal propagation path, the preset minimum visibility probability value is determined as the visibility probability value of the satellite for the candidate position. Based on this, a variety of practical situations are taken into account for the determined visibility probability value, thereby improving the reliability and flexibility of the determined visibility probability value.

In some embodiments, as shown in FIG. 17, a case in which there are a plurality of obstructions, and heights of the plurality of obstructions are different is shown. In this case, the determining a visibility probability value of the satellite for the candidate position according to the first position relationship includes:
Operation 1702: Determine a candidate visibility probability value with a smallest value from the respective candidate visibility probability values of the plurality of the obstructions as the visibility probability value of the satellite for the candidate position.

Specifically, in a manner similar to that in the foregoing embodiments, the server determines a top-view position relationship between the linear signal propagation path and the top-view error space range of each obstruction, and determines a side-view position relationship between the linear signal propagation path and the top-view error space range of each obstruction. Based on this, the server then determines a candidate visibility probability value of the satellite for the candidate position under each obstruction based on the top-view position relationship and the side-view position relationship of each obstruction in a manner similar to that in the foregoing embodiments.

For example, there are an obstruction I1, an obstruction I2, an obstruction I3, and an obstruction I4. Therefore, it is necessary to determine top-view position relationships between the linear signal propagation path and top-view error space ranges of the obstruction I1, the obstruction I2, the obstruction I3, and the obstruction I4 respectively, and to determine side-view position relationships between the linear signal propagation path and side-view error space ranges of the obstruction I1, the obstruction I2, the obstruction I3, and the obstruction I4 respectively. Therefore, based on the respective top-view position relationships and side-view position relationships of the obstruction I1, the obstruction I2, the obstruction I3, and the obstruction I4, respective candidate visibility probability values of the satellite for the candidate position under the obstruction I1, the obstruction I2, the obstruction I3, and the obstruction I4 are determined. For example, the candidate visibility probability value of the satellite for the candidate position under the obstruction I1 is 0.9, the candidate visibility probability value of the satellite for the candidate position under the obstruction I2 is 0.4, the candidate visibility probability value of the satellite for the candidate position under the obstruction I3 is 0.6, and the candidate visibility probability value of the satellite for the candidate position under the obstruction I4 is 0.1.

Operation 1704: Determine a candidate visibility probability value with a smallest value from the respective candidate visibility probability values of the plurality of the obstructions as the visibility probability value of the satellite for the candidate position.

Specifically, the server determines a candidate visibility probability value with a smallest value from the respective candidate visibility probability values of each obstruction as the visibility probability value of the satellite for the candidate position. As can be seen from the foregoing description, a larger visibility probability value indicates less influence of the obstruction on positioning. Therefore, in order to ensure the accuracy of object positioning to the greatest extent, the worst shadowing situation can be taken into account by selecting the visibility probability value with the greatest influence on positioning for positioning. Therefore, the candidate visibility probability value with the smallest value is determined as the visibility probability value of the satellite for the candidate position. For ease of understanding, as can be seen from the foregoing example, the candidate visibility probability value of the satellite for the candidate position under the obstruction I1 is 0.9, the candidate visibility probability value of the satellite for the candidate position under the obstruction I2 is 0.4, the candidate visibility probability value of the satellite for the candidate position under the obstruction I3 is 0.6, and the candidate visibility probability value of the satellite for the candidate position under the obstruction I4 is 0.1. In the foregoing candidate visibility probability values, the smallest value is 0.1, that is, the candidate visibility probability value of the satellite for the candidate position under the obstruction I4 is the smallest. In this case, the candidate visibility probability value of the satellite for the candidate position under the obstruction I4 is determined as the visibility probability value of the satellite for the candidate position.

All examples In some embodiments are only for understanding this solution, and the specific settings need to be flexibly determined based on the actual situation.

In some embodiments, because a larger visibility probability value indicates less influence of the obstruction on positioning. Therefore, in order to ensure the accuracy of object positioning to the greatest extent, the worst shadowing situation can be taken into account by selecting the visibility probability value with the greatest influence on positioning for positioning. Therefore, the candidate visibility probability value with the smallest value is determined as the visibility probability value of the satellite for the candidate position, to ensure the reliability of subsequent object positioning.

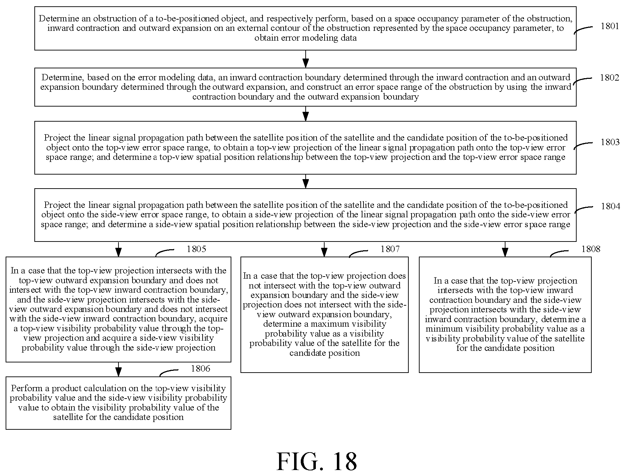

Based on the detailed descriptions of the foregoing embodiments, a complete process of the visibility probability determining method in the embodiments of this application will be described below. In some embodiments, as shown in FIG. 18, a visibility probability determining method is provided. A description is provided by using an example in which the method is applied to the server 104 in FIG. 1. The method may alternatively be applied to a system including the terminal 102 and the server 104, and implemented through the interaction between the terminal 102 and the server 104. In some embodiments, the method includes the following operations:
Operation 1801: Determine an obstruction of a to-be-positioned object, and respectively perform, based on a space occupancy parameter of the obstruction, inward contraction and outward expansion on an external contour of the obstruction represented by the space occupancy parameter, to obtain error modeling data.
Operation 1802: Determine, based on the error modeling data, an inward contraction boundary determined through the inward contraction and an outward expansion boundary determined through the outward expansion, and construct an error space range of the obstruction by using the inward contraction boundary and the outward expansion boundary.
Operation 1803: Project the linear signal propagation path between the satellite position of the satellite and the candidate position of the to-be-positioned object onto the top-view error space range, to obtain a top-view projection of the linear signal propagation path onto the top-view error space range; and determine a top-view position relationship between the top-view projection and the top-view error space range.
Operation 1804: Project the linear signal propagation path between the satellite position of the satellite and the candidate position of the to-be-positioned object onto the side-view error space range, to obtain a side-view projection of the linear signal propagation path onto the side-view error space range; and determine a side-view position relationship between the side-view projection and the side-view error space range.
Operation 1805: In a case that the top-view projection intersects with the top-view outward expansion boundary and does not intersect with the top-view inward contraction boundary, and the side-view projection intersects with the side-view outward expansion boundary and does not intersect with the side-view inward contraction boundary, acquire a top-view visibility probability value through the top-view projection and acquire a side-view visibility probability value through the side-view projection.
Operation 1806: Perform a product calculation on the top-view visibility probability value and the side-view visibility probability value to obtain the visibility probability value of the satellite for the candidate position.
Operation 1807: In a case that the top-view projection does not intersect with the top-view outward expansion boundary and the side-view projection does not intersect with the side-view outward expansion boundary, determine a preset maximum visibility probability value as a visibility probability value of the satellite for the candidate position.
Operation 1808: In a case that the top-view projection intersects with the top-view inward contraction boundary and the side-view projection intersects with the side-view inward contraction boundary, determine a preset minimum visibility probability value as a visibility probability value of the satellite for the candidate position.

The specific implementation of operation 1801 to operation 1808 is similar to those in the foregoing embodiments, and details are not described herein again.

Although the steps in the flowcharts involved in the foregoing embodiments are displayed sequentially according to instructions of arrows, these steps are not necessarily performed sequentially according to a sequence instructed by the arrows. Unless explicitly specified in this specification, execution of the steps is not strictly limited in the sequence, and the steps may be performed in other sequences. In addition, at least some steps in the flowcharts involved in the foregoing embodiments may include a plurality of steps or a plurality of stages. The steps or the stages are not necessarily performed at the same moment, but may be performed at different moments. The steps or the stages are not necessarily performed in sequence, but may be performed in turn or alternately with another step or at least some of steps or stages of the another step.

Based on the same inventive concept, an embodiment of this application further provides a visibility probability determining apparatus configured to implement the foregoing visibility probability determining method. The implementation solution provided by this apparatus to resolve the problem is similar to the implementation solution recorded in the foregoing method. Therefore, for specific limitations in the one or more embodiments of the visibility probability determining apparatus provided below, reference may be made to the limitations on the visibility probability determining method above, and details are not described herein again.

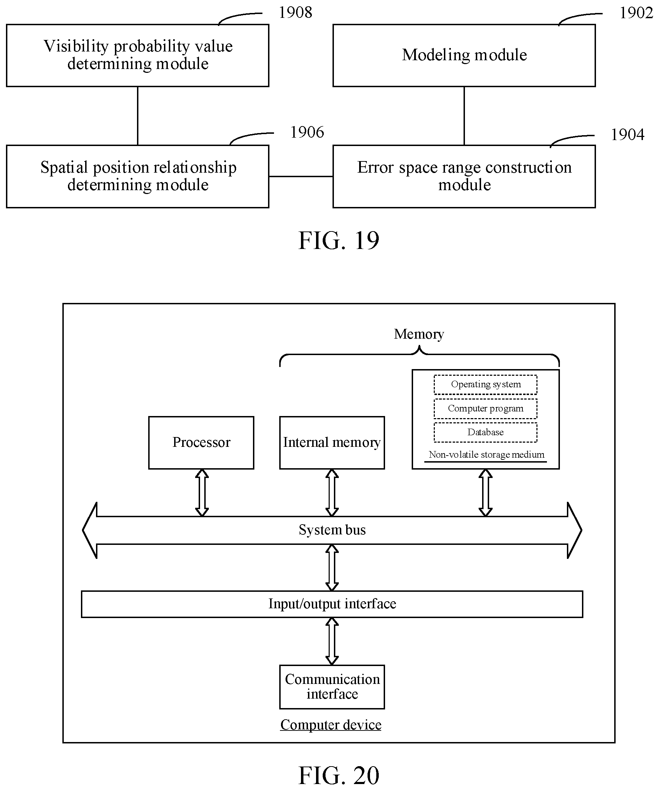

In some embodiments, as shown in FIG. 19, a visibility probability determining apparatus is provided, including: a modeling module 1902, an error space range construction module 1904, a position relationship determining module 1906, and a visibility probability value determining module 1908, where:
the modeling module 1902 is configured to determine an obstruction of a to-be-positioned object, and respectively perform, based on a space occupancy parameter of the obstruction, inward contraction and outward expansion on an external contour of the obstruction represented by the space occupancy parameter, to obtain error modeling data;
the error space range construction module 1904 is configured to determine, based on the error modeling data, an inward contraction boundary determined through the inward contraction and an outward expansion boundary determined through the outward expansion, and construct an error space range of the obstruction by using the inward contraction boundary and the outward expansion boundary;
the position relationship determining module 1906 is configured to acquire a candidate position of the to-be-positioned object, and determine, based on a linear signal propagation path between a satellite position of a satellite and the candidate position, a first position relationship between the linear signal propagation path and the error space range; and
the visibility probability value determining module 1908 is configured to determine a visibility probability value of the satellite for the candidate position according to the first position relationship, the visibility probability value being configured for determining a satellite positioning position of the to-be-positioned object in combination with the candidate position.

In some embodiments, the error space range includes a top-view error space range and a side-view error space range;
the position relationship determining module 1906 is specifically configured to: determine a top-view position relationship between the linear signal propagation path and the top-view error space range based on the linear signal propagation path between the satellite position of the satellite and the candidate position of the to-be-positioned object; and determine a side-view position relationship between the linear signal propagation path and the side-view error space range based on the linear signal propagation path between the satellite position of the satellite and the candidate position of the to-be-positioned object; and
the visibility probability value determining module 1908 is specifically configured to: determine the visibility probability value of the satellite for the candidate position according to the top-view position relationship and the side-view position relationship.

In some embodiments, the position relationship determining module 1906 is specifically configured to: project the linear signal propagation path between the satellite position of the satellite and the candidate position of the to-be-positioned object onto the top-view error space range, to obtain a top-view projection of the linear signal propagation path onto the top-view error space range; determine a top-view position relationship between the top-view projection and the top-view error space range; project the linear signal propagation path between the satellite position of the satellite and the candidate position of the to-be-positioned object onto the side-view error space range, to obtain a side-view projection of the linear signal propagation path onto the side-view error space range; and determine a side-view position relationship between the side-view projection and the side-view error space range.

In some embodiments, the error space range includes the top-view error space range and the side-view error space range; the top-view error space range is formed by a space range between a top-view outward expansion boundary and a top-view inward contraction boundary; and the side-view error space range is formed by a space range between a side-view outward expansion boundary and a side-view inward contraction boundary;
the first position relationship includes the top-view position relationship and the side-view position relationship; the top-view position relationship includes at least: a position relationship between the top-view projection of the linear signal propagation path onto the top-view error space range and the top-view outward expansion boundary, or a position relationship between the top-view projection and the top-view inward contraction boundary; and the side-view position relationship includes at least: a position relationship between the side-view projection of the linear signal propagation path onto the side-view error space range and the side-view outward expansion boundary, or a position relationship between the side-view projection and the side-view inward contraction boundary.

In some embodiments, the visibility probability value determining module 1908 is specifically configured to: in a case that the top-view projection intersects with the top-view outward expansion boundary and does not intersect with the top-view inward contraction boundary, and the side-view projection intersects with the side-view outward expansion boundary and does not intersect with the side-view inward contraction boundary, acquire a top-view visibility probability value through the top-view projection and acquire a side-view visibility probability value through the side-view projection; and perform a product calculation on the top-view visibility probability value and the side-view visibility probability value to obtain the visibility probability value of the satellite for the candidate position.

In some embodiments, the top-view error space range includes a top-view external contour of the obstruction; and
the visibility probability value determining module 1908 is specifically configured to: determine a top-view vertex closest to the top-view projection from the top-view external contour, and determine a top-view inward contraction vertex corresponding to the top-view vertex and a top-view outward expansion vertex corresponding to the top-view vertex from the top-view inward contraction boundary; determine a top-view vertical distance between the top-view projection and the top-view inward contraction vertex, and a top-view vertex distance between the top-view inward contraction vertex and the top-view outward expansion vertex, the top-view vertical distance representing a distance by which the top-view projection is shadowed within the top-view error space range, and the top-view vertex distance representing a maximum shadow distance of the top-view projection within the top-view error space range; and calculate the top-view visibility probability value based on the top-view vertical distance and the top-view vertex distance, a ratio between the top-view vertical distance and the top-view vertex distance being negatively correlated with the top-view visibility probability value.

In some embodiments, the side-view error space range includes a side-view external contour of the obstruction; and
the visibility probability value determining module 1908 is specifically configured to: determine a side-view vertex closest to the side-view projection from the side-view external contour, and determine a side-view inward contraction vertex corresponding to the side-view vertex and a side-view outward expansion vertex corresponding to the side-view vertex from the side-view inward contraction boundary; determine a side-view vertical distance between the side-view projection and the side-view inward contraction vertex, and a side-view vertex distance between the side-view inward contraction vertex and the side-view outward expansion vertex, the side-view vertical distance representing a distance by which the side-view projection is shadowed within the side-view error space range, and the side-view vertex distance representing a maximum shadow distance of the side-view projection within the side-view error space range; and calculate the side-view visibility probability value based on the side-view vertical distance and the side-view vertex distance, a ratio between the side-view vertical distance and the side-view vertex distance being negatively correlated with the side-view visibility probability value.

In some embodiments, the visibility probability value determining module 1908 is specifically configured to: in a case that the top-view projection does not intersect with the top-view outward expansion boundary and the side-view projection does not intersect with the side-view outward expansion boundary, determine a preset maximum visibility probability value as a visibility probability value of the satellite for the candidate position.

In some embodiments, the visibility probability value determining module 1908 is specifically configured to: in a case that the top-view projection intersects with the top-view inward contraction boundary and the side-view projection intersects with the side-view inward contraction boundary, determine a preset minimum visibility probability value as a visibility probability value of the satellite for the candidate position.

In some embodiments, the space occupancy parameter includes a height and vertex coordinates, and the error modeling data includes a height after the inward contraction and a height after the outward expansion, and vertex coordinates after the inward contraction and vertex coordinates after the outward expansion; and
the modeling module 1902 is specifically configured to: construct an outward expansion boundary of the obstruction according to the space occupancy parameter and the height after the outward expansion and the vertex coordinates after the outward expansion in the error modeling data; construct an inward contraction boundary of the obstruction according to the space occupancy parameter and the height after the inward contraction and the vertex coordinates after the inward contraction in the error modeling data; and determine a space range between the outward expansion boundary and the inward contraction boundary as an error space range including the external contour of the obstruction.

In some embodiments, there are a plurality of obstructions; and
the visibility probability value determining module 1908 is specifically configured to: determine respective candidate visibility probability values of the satellite for the candidate position under the plurality of obstructions according to the first position relationship; and determine a candidate visibility probability value with a smallest value from the respective candidate visibility probability values of the plurality of obstructions as the visibility probability value of the satellite for the candidate position.

In some embodiments, a computer device is provided. The computer device may be a server or a terminal. In some embodiments, a description is provided by using an example in which the computer device is a server, and a diagram of an internal structure thereof may be shown in FIG. 20. The computer device includes a processor, a memory, an input/output (I/O) interface, and a communication interface. The processor, the memory, and the input/output interface are connected to each other by a system bus, and the communication interface is connected to the system bus by the input/output interface. The processor of the computer device is configured to provide computing and control capabilities. The memory of the computer device includes a non-volatile storage medium and an internal memory. The non-volatile storage medium stores an operating system, a computer program, and a database. The internal memory provides an environment for running of the operating system and the computer program in the non-volatile storage medium. The database of the computer device is configured to store data related to the embodiments of this application, such as a space occupancy parameter of an obstruction and error modeling data. The input/output interface of the computer device is configured to exchange information between the processor and an external device. The communication interface of the computer device is configured to communicate with an external terminal through a network connection. The computer program is executed by the processor to implement a visibility probability determining method.

A person skilled in the art may understand that, the structure shown in FIG. 20 is only a block diagram of a partial structure related to the solution of this application, and does not limit the computer device to which the solution of this application is applied. Specifically, the computer device may include more components or fewer components than those shown in the figure, or some components may be combined, or a different component deployment may be used.

In some embodiments, a computer device is further provided, including a memory and a processor, the memory storing a computer program, and the processor, when executing the computer program, implementing the operations in the foregoing method embodiments.

In some embodiments, a computer-readable storage medium is provided, having a computer program stored therein, the computer program, when executed by a processor, implementing the operations in the foregoing method embodiments.

In some embodiments, a computer program product is provided, including a computer program, the computer program, when executed by a processor, implementing the operations in the foregoing method embodiments.

Both object information (including but not limited to object device information and object personal information) and data (including but not limited to data used for analysis, stored data, and displayed data) involved in this application are information and data authorized by the object or fully authorized by all parties, and the collection, use, and processing of relevant data need to comply with relevant laws, regulations and standards of relevant countries and regions.

A person of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. Any reference to a memory, a database, or another medium used in the embodiments provided in this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive memory (ReRAM), a magnetoresistive random access memory (MRAM), a ferroelectric random access memory (FRAM), a phase change memory (PCM), a graphene memory, and the like. The volatile memory may include a random access memory (RAM), an external cache, or the like. For the purpose of description instead of limitation, the RAM is available in a plurality of forms, such as a static RAM (SRAM) or a dynamic RAM (DRAM). The databases involved in the embodiments provided in this application may include at least one of relational databases or non-relational databases. The non-relational databases may include blockchain-based distributed databases and the like, and are not limited thereto. The processors involved in the embodiments provided in this application may be general-purpose processors, central processing units, graphics processors, digital signal processors, programmable logic devices, quantum computing-based data processing logic devices, and the like, and are not limited thereto.

The technical features in the foregoing embodiments may be combined in different manners to form other embodiments. For concise description, not all possible combinations of the technical features in the embodiments are described. However, provided that combinations of the technical features do not conflict with each other, the combinations of the technical features are considered as falling within the scope recorded in this specification.

The foregoing embodiments only describe several implementations of this application, which are described specifically and in detail, but cannot be construed as a limitation to the patent scope of the present disclosure. For a person of ordinary skill in the art, several transformations and improvements can be made without departing from the idea of this application, which all fall within the protection scope of this application. Therefore, the protection scope of this application is subject to the protection scope of the appended claims.

## Claims

1. A method for satellite-based positioning, executable by a computer device, the method comprising:
determining an obstruction of an object;
obtaining a space occupancy parameter of the obstruction, the space occupancy parameter indicating a first model of the obstruction;
determining error modeling data by performing, based on the space occupancy parameter, an inward contraction on the first model to generate a second model and an outward expansion on the first model to generate a third model, the error modeling data comprising a first parameter indicating the second model and a second parameter indicating the third model;
determining, based on the error modeling data, a first space bounded by a first outer surface of the second model and a second outer surface of the third model;
acquiring a candidate position of the object and a satellite position of a satellite;
determining, based on a linear signal propagation path between the satellite position and the candidate position, a first position relationship between the linear signal propagation path and the first space; and
determining a visibility probability value of the satellite for the candidate position according to the first position relationship, the visibility probability value being configured for determining a position of the object.

2. The method according to claim 1, wherein the determining, based on a linear signal propagation path between the satellite position and the candidate position, a first position relationship between the linear signal propagation path and the first space comprises:
determining a top-view projection of the linear signal propagation path onto a top-view plane, and a top-view outer boundary and a top-view inner boundary of the first space on the top-view plane, the top-view outer boundary corresponding to a projection of the third model on the top-view plane, and the top-view inner boundary corresponding to a projection of the second model on the top-view plane;
determining the top-view position relationship based on an intersection status between the top-view projection and at least one of the top-view outer boundary and the top-view inner boundary;
determining a side-view projection of the linear signal propagation path onto a side-view plane, and a side-view outer boundary and a side-view inner boundary of the first space on the side-view plane, the side-view outer boundary corresponding to a projection of the third model on the side-view plane, and the side-view inner boundary corresponding to a projection of the second model on the side-view plane;
determining the side-view position relationship based on an intersection status between the side-view projection and at least one of the side-view outer boundary and the side-view inner boundary.

3. The method according to claim 2, the determining a visibility probability value of the satellite for the candidate position according to the first position relationship comprises:
determining the visibility probability value of the satellite for the candidate position according to the top-view position relationship and the side-view position relationship.

4. The method according to any one of claims 1 to 3, wherein;
the first position relationship comprises a top-view position relationship and a side-view position relationship;
the top-view position relationship comprises: a second position relationship between a top-view projection of the linear signal propagation path onto a top-view plane and one of a top-view outer boundary and a top-view inner boundary of the first space on the top-view plane; and
the side-view position relationship comprises: a third position relationship between a side-view projection of the linear signal propagation path onto the side-view plane and one of a side-view outer boundary and a side-view inner boundary of the first space on the side-view plane.

5. The method according to claim 4, wherein the determining a visibility probability value of the satellite for the candidate position according to the first position relationship, the visibility probability value being configured for determining a position of the object comprises:
in a case that the top-view projection intersects with the top-view outer boundary and does not intersect with the top-view inner boundary, and the side-view projection intersects with the side-view outer boundary and does not intersect with the side-view inner boundary, acquiring a top-view visibility probability value based on a geometric relationship between the top-view projection and the top-view inner boundary; and obtaining a side-view visibility probability value based on a geometric relationship between the side-view projection and the side-view inner boundary; and
performing a product calculation on the top-view visibility probability value and the side-view visibility probability value to obtain the visibility probability value of the satellite for the candidate position.

6. The method according to claim 5, the acquiring a top-view visibility probability value based on a geometric relationship between the top-view projection and the top-view inner boundary comprises:
determining, from vertices of a top-view external contour of the first model, a top-view vertex closest to the top-view projection;
determining a top-view inner vertex corresponding to the top-view vertex, the top-view inner vertex lying on the top-view inner boundary;
determining a top-view outer vertex corresponding to the top-view vertex, the top-view outer vertex lying on the top-view outer boundary;
determining a top-view perpendicular distance from the top-view inner vertex to the top-view projection, and a top-view vertex distance between the top-view inner vertex and the top-view outer vertex; and
calculating the top-view visibility probability value based on a first ratio of the top-view perpendicular distance to the top-view vertex distance, the first ratio being negatively correlated with the top-view visibility probability value.

7. The method according to claim 5, the obtaining a side-view visibility probability value based on a geometric relationship between the side-view projection and the side-view inner boundary comprises:
determining, from vertices of a side-view external contour of the first model, a side-view vertex closest to the side-view projection;
determining a side-view inner vertex corresponding to the side-view vertex, the side-view inner vertex lying on the side-view inner boundary;
determining a side-view outer vertex corresponding to the side-view vertex, the side-view outer vertex lying on the side-view outer boundary;
determining a side-view perpendicular distance from the side-view inner vertex to the side-view projection, and a side-view vertex distance between the side-view inner vertex and the side-view outer vertex; and
calculating the side-view visibility probability value based on a second ratio of the side-view perpendicular distance to the side-view vertex distance, the second ratio being negatively correlated with the side-view visibility probability value.

8. The method according to any one of claims 4 to 7, wherein the determining a visibility probability value of the satellite for the candidate position according to the first position relationship, the visibility probability value being configured for determining a position of the object comprises:
in a case that the top-view projection does not intersect with the top-view outer boundary and the side-view projection does not intersect with the side-view outer boundary, determining a preset maximum visibility probability value as the visibility probability value of the satellite for the candidate position.

9. The method according to any one of claims 4 to 7, wherein the determininga visibility probability value of the satellite for the candidate position according to the first position relationship, the visibility probability value being configured for determining a position of the object comprises:
in a case that the top-view projection intersects with the top-view inner boundary and the side-view projection intersects with the side-view inner boundary, determining a preset minimum visibility probability value as the visibility probability value of the satellite for the candidate position.

10. The method according to any one of claims 1 to 9, wherein the space occupancy parameter comprises vertex coordinates of a base of the obstruction and a height of the obstruction; and
the determining error modeling data by performing, based on the space occupancy parameter, an inward contraction on the first model to generate a second model and an outward expansion on the first model to generate a third model comprises:
performing an inward offset on the vertex coordinates of the base to obtain contracted vertex coordinates, and reducing the height to obtain a contracted height, the second model being indicated by the contracted vertex coordinates and the contracted height; and
performing an outward offset on the vertex coordinates of the base to obtain expanded vertex coordinates, and increasing the height to obtain an expanded height, the third model being indicated by the expanded vertex coordinates and the expanded height.

11. The method according to claim 1, the determining a visibility probability value of the satellite for the candidate position according to the first position relationship comprises:
calculating, for each of a plurality of the obstructions, a candidate visibility probability value based on a respective first position relationship; and
selecting a smallest one of the candidate visibility probability values as the visibility probability value of the satellite for the candidate position.

12. A apparatus for satellite-based positioning, comprising:
a modeling module, configured to determine an obstruction of an object; obtaining a space occupancy parameter of the obstruction, the space occupancy parameter indicating a first model of the obstruction; determine error modeling data by performing, based on the space occupancy parameter, an inward contraction on the first model to generate a second model and an outward expansion on the first model to generate a third model, the error modeling data comprising a first parameter indicating the second model, and a second parameter indicating the third model;
an error space range construction module, configured to determine, based on the error modeling data, a first space bounded by a first outer surface of the second model and a second outer surface of the third model;
a position relationship determining module, configured to acquire a candidate position of the object and a satellite position of a satellite; determine, based on a linear signal propagation path between the satellite position and the candidate position, a first position relationship between the linear signal propagation path and the first space; and
a visibility probability value determining module, configured to determine a visibility probability value of the satellite for the candidate position according to the first position relationship, the visibility probability value being configured for determining a position of the object.

13. A computer device, comprising a memory and a processor, the memory storing a computer program, the processor, when executing the computer program, implementing the operations of the method according to any one of claims 1 to 11.

14. A computer-readable storage medium, having a computer program stored therein, the computer program, when executed by a processor, performing the operations of the method according to any one of claims 1 to 11.

15. A computer program product, comprising a computer program, the computer program, when executed by a processor, implementing the operations of the method according to any one of claims 1 to 11.
